(19) Europäisches Patentamt
European Patent Office
Office européen des brevets

(11) **EP 2 415 995 B1**

(12) **EUROPEAN PATENT SPECIFICATION**

(45) Date of publication and mention
of the grant of the patent:
**06.07.2016 Bulletin 2016/27**

(21) Application number: **09849824.9**

(22) Date of filing: **28.09.2009**

(51) Int Cl.:
*F02D 41/04* *(2006.01)*    *F02D 45/00* *(2006.01)*
*F02D 41/40* *(2006.01)*    *F02D 35/02* *(2006.01)*
*F02D 41/00* *(2006.01)*

(86) International application number:
**PCT/JP2009/066771**

(87) International publication number:
**WO 2011/036793 (31.03.2011 Gazette 2011/13)**

(54) **CONTROL DEVICE FOR INTERNAL COMBUSTION ENGINE**

STEUERVORRICHTUNG FÜR VERBRENNUNGSMOTOR

DISPOSITIF DE COMMANDE POUR MOTEUR À COMBUSTION INTERNE

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(43) Date of publication of application:
**08.02.2012 Bulletin 2012/06**

(73) Proprietor: **TOYOTA JIDOSHA KABUSHIKI
KAISHA**
**Toyota-shi, Aichi-ken, 471-8571 (JP)**

(72) Inventor: **MATSUNAGA, Akio**
**Toyota-shi**
**Aichi 471-8571 (JP)**

(74) Representative: **TBK**
**Bavariaring 4-6**
**80336 München (DE)**

(56) References cited:
**WO-A1-2008/120664      DE-A1- 19 927 846**
**JP-A- 2002 155 770      JP-A- 2005 535 823**
**JP-A- 2009 007 966      US-A1- 2004 261 414**
**US-B1- 6 651 432**

EP 2 415 995 B1

**Description**

The present invention relates to a control apparatus of a compression self-ignition internal combustion engine. In particular, the present invention relates to a technique for reducing the amount of NOx produced along with combustion in a combustion chamber.

Background Art

In engines that perform lean combustion, such as diesel engines, an operation range in which an air-fuel mixture having a high air-fuel ratio (lean atmosphere) is caused to combust accounts for most of the entire operation range, thus causing concern regarding the emission of a relatively large amount of nitrogen oxides (hereinafter referred to as NOx).
Also, as is disclosed in JP 2005-090368 A and JP 2005-180220 A, it is generally known that the amount of NOx produced is correlated with the in-cylinder combustion temperature (flame temperature). Accordingly, in order to reduce the amount of NOx produced, it is effective to appropriately control the in-cylinder flame temperature.
Also, another known technique for reducing the amount of NOx produced is the provision of an EGR (Exhaust Gas Recirculation) apparatus that recirculates part of the exhaust gas into the intake path. Specifically, the in-cylinder oxygen concentration and oxygen density are lowered by recirculating exhaust gas into the cylinders. This lowers the combustion temperature (flame temperature) in the combustion stroke, thereby suppressing the production of NOx and improving exhaust emissions.
Incidentally, even if exhaust gas is recirculated into the combustion chamber by the exhaust gas recirculation apparatus, the amount of heat generated in the combustion chamber may significantly rise depending on the condition of the combustion of fuel subsequently injected into the combustion chamber. If the flame temperature in the combustion chamber then rises significantly higher than the NOx production temperature (e.g., 2200 K), this leads to a situation in which the NOx production amount rises. In other words, currently there is a limit to the reduction in the amount of NOx produced by merely adjusting the condition of gas in the combustion chamber with the amount of exhaust gas that is recirculated.
In view of the above, the inventors of the present invention focused on the fact that the flame temperature of the combustion field in the combustion chamber greatly influences the NOx production amount, and gave consideration to reducing the NOx production amount by making the flame temperature appropriate.
US 6 651 432 B1 shows a method of operating an internal combustion engine wherein intake ambient air is boosted to a higher pressure by passage through at least one compressor and then introduced into the internal combustion engine. Fuel is also introduced into the internal combustion engine for providing combustion in admixture with the air charge at a combustion temperature approximating a target value. Various engine operating parameters, inclusive of torque demand, e.g., accelerator pedal depression, are sensed and the boosted pressure is changed in a manner proportional to a change in the sensed torque demand so as to maintain the combustion temperature at approximately a target value.
US 2004/261414 A1 shows a combustion control device which optimizes combustion regardless of the cetane number of a fuel of an internal combustion engine by focusing on the correlation between the cetane number and specific gravity of the fuel, and correcting combustion control based on the specific gravity of the fuel. The combustion control device comprises a sensor which detects the specific gravity of the fuel, a device which adjusts a combustion-related element of the internal combustion engine such as fuel injection, compression end in-cylinder temperature and an intake air swirl, and a controller programmed to correct a target value of the element based on the specific gravity of the fuel, and control the adjusting device so that the corrected target value is realized.
JP 2009 007966 A shows a control device for an internal combustion engine, by which a target compression end temperature is calculated according to a required torque and engine speed of an engine, and also an estimated compression end temperature is calculated based on cylinder inner pressure to be detected. The estimated compression end temperature is subtracted from the target compression end temperature to thereby calculate a temperature deviation, and an amount of fuel injected in a first pilot injection is calculated so that the temperature deviation is set to 0.
WO 2008/120664 A1 shows a controller of an internal combustion engine which can achieve a plurality of functions required for an internal combustion engine. Total energy to be generated from an engine is determined by adding a target work calculated in energy form, a target exhaust energy and a cooling loss at an adding section. A target fuel supply required for generating the total energy is calculated at a target fuel supply calculating section. A target quantity of intake gas is calculated from the target fuel supply and a target A/F at a target quantity of intake gas calculating section. A target ignition timing required for achieving target exhaust energy is calculated at a target ignition timing calculating section.

Summary of the invention

It is the object of the present invention to concurrently achieve a target amount of heat input to an internal combustion engine and to reduce the amount of NOx produced as combustion occurs in a combustion chamber.

The object of the present invention is achieved by a control apparatus having the features of claim 1.

Further advantageous developments of the present invention are defined in the dependent claims.

It is an advantage of the present invention to reduce the amount of NOx produced by making the flame temperature of the combustion field appropriate, i.e. to enable providing the flame temperature of a combustion field as a target value and reducing the amount of NOx produced by making the flame temperature appropriate through controlling the amount of heat input to a cylinder based on a physical quantity that specifies the amount of heat generated in the combustion field.

Specifically, the present invention is premised on a control apparatus of a compression self-ignition internal combustion engine in which fuel injected from a fuel injection valve is caused to combust by self-ignition in a combustion chamber. This control apparatus of an internal combustion engine is provided with an input heat amount specification unit and an input heat amount adjustment unit. Using the volume of a combustion field in which the fuel combusts, the temperature before the start of combustion in the combustion field, a combustion field target temperature for limiting the amount of NOx produced during combustion in the combustion field to a predetermined target NOx production amount, the density of gas existing in the combustion field, and the specific heat of gas existing in the combustion field as parameters, the input heat amount specification unit specifies an amount of heat input to the combustion chamber according to which the temperature during combustion in the combustion field becomes the combustion field target temperature. The input heat amount adjustment unit adjusts an amount of heat input to the combustion chamber using the input heat amount specified by the input heat amount specification unit as a maximum value of the input heat amount.

According to this specified matter, firstly the input heat amount specification unit specifies, based on the parameters, the amount of heat input to the combustion chamber according to which the temperature during combustion in the combustion field becomes the combustion field target temperature. In other words, the input heat amount specification unit specifies the amount of heat input to the combustion chamber for achieving the combustion field target temperature that enables limiting the amount of NOx produced during combustion in the combustion field to a predetermined target NOx production amount. The input heat amount adjustment unit then adjusts the amount of heat input to the combustion chamber using the specified input heat amount as the maximum value of the input heat amount. In other words, the input heat amount adjustment unit adjusts the amount of heat input to the combustion chamber so as to be less than or equal to the maximum value of the input heat amount. Accordingly, combustion is performed in the condition in which the temperature of the combustion field is less than or equal to the combustion field target temperature, thus enabling limiting the amount of NOx produced in the combustion field so as to be less than or equal to the predetermined target NOx production amount, and making it possible to improve exhaust emissions.

Further, the input heat amount specification unit is configured so as to partition a period of combustion in the combustion chamber into a plurality of micro-periods, and specify the amount of heat input to the combustion chamber according to which the combustion temperature of the combustion field becomes the combustion field target temperature in each of the micro-periods.

Accordingly, the input heat amount for limiting the amount of NOx produced during combustion in the combustion field to the predetermined target NOx production amount can be specified with high precision in each of the micro-periods. As a result, the amount of NOx produced in the combustion field can be limited so as to be less than or equal to the predetermined target NOx production amount over substantially the entirety of the combustion period.

As a preferable configuration, the input heat amount specification unit may be configured so as to specify the amount of heat input to the combustion chamber according to which the temperature during combustion in the combustion field becomes the combustion field target temperature only in, within the period of combustion in the combustion chamber, a period up to when a heat generation rate substantially reaches a peak value.

After the heat generation rate has reached the peak value in the combustion period, the combustion field temperature tends to gradually decrease thereafter, and accordingly the possibility of a rise in the NOx production amount decreases. In consideration of this fact, the period for specifying the amount of heat input to the combustion chamber according to which the temperature during combustion in the combustion field becomes the combustion field target temperature is only the period up to when the heat generation rate substantially reaches the peak value. This enables limiting the amount of NOx produced so as to be less than or equal to the predetermined target NOx production amount over the entirety of the combustion period, while keeping the period for specifying the input heat amount to a minimum.

The following configurations are examples of preferable configurations for the input heat amount adjustment unit.

Firstly, the input heat amount adjustment unit may be configured so as to be aware in advance of, an amount that is converted into a heat amount in the combustion chamber of an injection amount of fuel injected from the fuel injection valve to the combustion chamber, and set an amount of fuel injected from the fuel injection valve such that an amount of heat input to the combustion chamber corresponding to the converted heat amount is less than or equal to the maximum value of the input heat amount.

Also, the control apparatus of an internal combustion engine may include: an exhaust gas recirculation apparatus that recirculates a part of exhaust gas discharged from an exhaust system to an intake system, wherein the input heat amount adjustment unit may be configured so as to adjust the amount of heat input to the combustion chamber by setting an amount of exhaust gas recirculated by the exhaust gas recirculation apparatus such that the temperature of the combustion field becomes the combustion field target temperature.

Also, the control apparatus of an internal combustion engine may include: an injection pressure adjustment unit that adjusts an injection pressure of fuel injected from the fuel injection valve, wherein the input heat amount adjustment unit may be configured so as to, with use of the injection pressure adjustment unit, set the injection pressure such that the temperature of the combustion field becomes the combustion field target temperature.

According to such configurations, it is possible to specifically achieve an input heat amount adjustment operation by the input heat amount adjustment unit. In particular, in the case of the configuration in which the amount of heat input to the combustion chamber is adjusted using the exhaust gas recirculation amount or the injection pressure, the amount of heat input to the combustion chamber can be appropriately adjusted without reducing the amount of fuel injected from the fuel injection valve, thus enabling keeping a high fuel efficiency.

As another preferable configuration, in the case where the period of combustion in the combustion chamber has been partitioned into a plurality of micro-periods as described above, the input heat amount specification unit may be configured so as to, giving consideration to a degree of influence that the amount of heat generated in the combustion field in a previous micro-period exerts on the temperature before the start of combustion in the combustion field in the current micro-period, specify the amount of heat input to the combustion chamber according to which the temperature during combustion in the combustion field in the current micro-period becomes the combustion field target temperature, by correcting the temperature before the start of combustion in the current micro-period.

Also, the input heat amount specification unit may be configured so as to, giving consideration to an amount of decrease in the temperature of the combustion field due to fuel injected into the combustion chamber, obtain the temperature before the start of combustion in the current micro-period by correcting the temperature before the start of combustion in a previous micro-period, and specify the amount of heat input to the combustion chamber according to which the temperature during combustion in the combustion field in the current micro-period becomes the combustion field target temperature.

In other words, one example of the degree of influence that the heat amount generated in the combustion field in the previous micro-period exerts on the temperature before the start of combustion in the combustion field in the current micro-period is causing a rise in the temperature before the start of combustion. Conversely, if the temperature of the combustion field decreases due to the fuel injected in the combustion chamber, the temperature before the start of combustion in the combustion field in the current micro-period falls below the temperature before the start of combustion in the combustion field in the previous micro-period. Specifying the amount of heat input to the combustion chamber giving consideration to such change in the temperature before the start of combustion enables precisely obtaining the maximum value of the input heat amount.

If the temperature before the start of combustion in the combustion field is greater than or equal to the combustion field target temperature, the heat amount cannot be input to the targeted combustion field for which the input heat amount was specified by the input heat amount specification unit. For this reason, in such a situation, a spray moving unit may be provided for moving a spray of fuel such that a new combustion field is formed in an area different from that of the combustion field in which the heat amount specified by the input heat amount specification unit is to be input.

As a specific means for moving the fuel spray, the spray moving unit may be configured so as to execute at least one of changing the injection pressure of fuel injected from the fuel injection valve, changing swirling in the combustion chamber, changing a fuel injection interval, and changing a fuel injection period.

According to this configuration, combustion is performed in combustion field different from the targeted combustion field, thus enabling preventing the combustion temperature in the combustion field from exceeding the combustion field target temperature.

As another preferable configuration, the input heat amount specification unit may be configured so as to obtain the specific heat of gas existing in the combustion field in the current micro-period by correcting the specific heat of gas existing in the combustion field in a previous micro-period, and specify the amount of heat input to the combustion chamber according to which the temperature during combustion in the combustion field in the current micro-period becomes the combustion field target temperature.

In this case as well, specifying the amount of heat input to the combustion chamber giving consideration to change in the gas specific heat that accompanies the progression of combustion in the combustion field enables precisely obtaining the maximum value of the input heat amount.

Also, the input heat amount specification unit may be configured so as to read out an input heat amount from an input heat amount specification map that enables specification of an amount of heat input to the combustion chamber in accordance with the combustion field target temperature.

This configuration eliminates the need for an arithmetic operation for specifying the amount of heat input to the combustion chamber according to which the combustion temperature becomes the combustion field target temperature, thus enabling swiftly adjusting the amount of heat input to the combustion chamber. Advantageous Effects of Invention

With the present invention, a flame temperature of a combustion field is given as a target value, and the amount of heat input to a cylinder is controlled based on a physical quantity specifying the amount of heat generated in the combustion field. This enables making the flame temperature in the combustion field appropriate, and enables improving exhaust emissions by reducing the amount of NOx produced.

Brief Description of Drawings

[FIG. 1] FIG. 1 is a diagram showing the schematic configuration of an engine and a control system thereof according to an embodiment.

[FIG. 2] FIG. 2 is a cross-sectional diagram showing a combustion chamber of a diesel engine and its surroundings.

[FIG. 3] FIG. 3 is a block diagram showing the configuration of a control system such as an ECU.

[FIG. 4] FIG. 4 is a schematic diagram of an intake/exhaust system and the combustion chamber for illustrating an overview of a combustion form in the combustion chamber.

[FIG. 5] FIG. 5 is a cross-sectional diagram showing the combustion chamber and its surroundings during fuel injection.

[FIG. 6] FIG. 6 is a plan view of the combustion chamber during fuel injection.

[FIG. 7] FIG. 7 is a diagram showing a heat generation rate waveform during a combustion period in the combustion chamber, and an enlarged view of a micro-period thereof.

[FIG. 8] FIG. 8 is a diagram showing a target combustion temperature setting map.

[FIG. 9] FIG. 9 is a diagram showing change in temperature before start of combustion and allowable rise in temperature of a combustion field when combustion progresses in the combustion chamber, and change in the fuel injection rate of an injector.

[FIG. 10] FIG. 10 is a diagram showing an example of an EGR rate correction map according to a second embodiment.

[FIG. 11] FIG. 11 is a diagram showing an example of an injection pressure correction map according to the second embodiment.

[FIG. 12] FIG. 12 is a diagram showing another example of an injection pressure correction map according to the second embodiment.

[FIG. 13] FIG. 13 is a diagram showing an example of a temperature before start of combustion correction coefficient map according to a third embodiment.

[FIG. 14] FIG. 14 is a diagram showing an example of a temperature before start of combustion correction coefficient map according to a fourth embodiment.

[FIG. 15] FIG. 15 is a diagram showing an example of a fuel injection pressure change map according to a fifth embodiment.

[FIG. 16] FIG. 16 is a diagram showing an example of a swirl change map according to the fifth embodiment.

[FIG. 17] FIG. 17 is a diagram showing an example of a fuel injection period change map according to the fifth embodiment.

[FIG. 18] FIG. 18 is a diagram showing a combustion gas specific heat correction coefficient map according to a sixth embodiment.

[FIG. 19] FIG. 19 is a diagram corresponding to FIG. 9 in the case of using a variable injection rate injector.

Description of Embodiments

Embodiments of the invention are described below with reference to the drawings. In these embodiments, a case will be described in which the present invention is applied to a common rail in-cylinder direct injection multi-cylinder (for example, inline four-cylinder) diesel engine (compression self-ignition internal combustion engine) mounted in an automobile.

- Engine configuration -

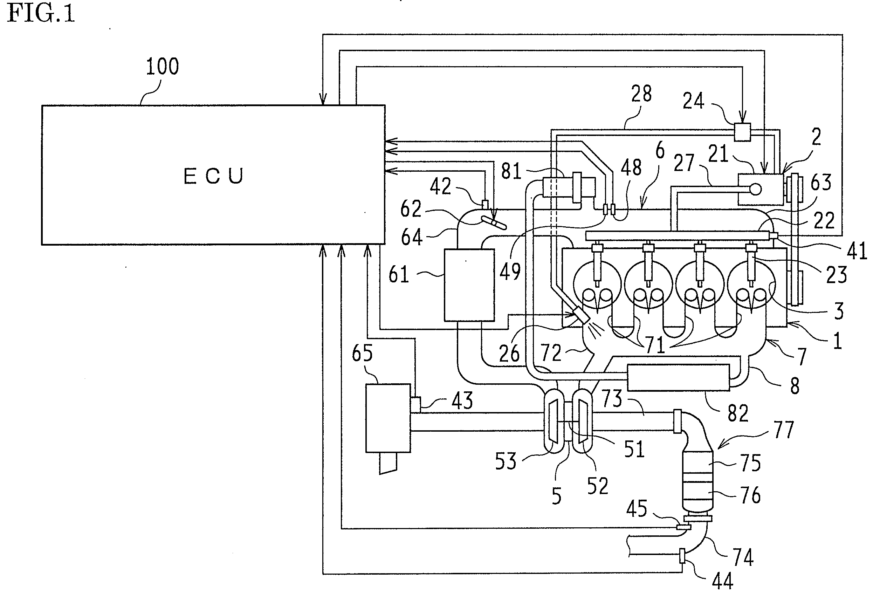

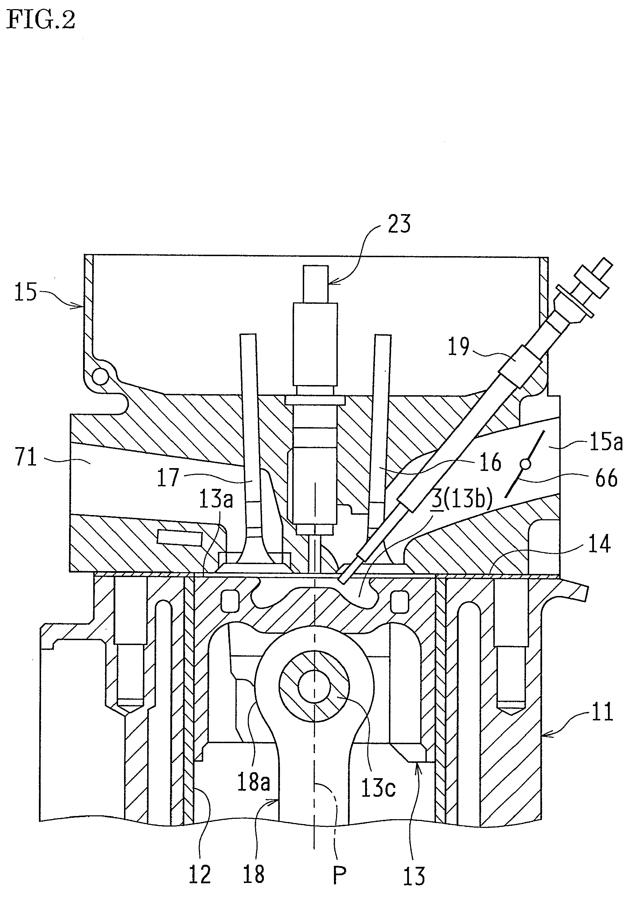

First, the overall configuration of a diesel engine (referred to below as simply the engine) according to the present embodiment will be described. FIG. 1 is a schematic configuration diagram of an engine 1 and a control system of the engine 1 according to the present embodiment. Also, FIG. 2 is a cross-sectional diagram showing a combustion chamber 3 of the diesel engine and its surroundings.

As shown in FIG. 1, the engine 1 according to the present embodiment is configured as a diesel engine system having a fuel supply system 2, combustion chambers 3, an intake system 6, an exhaust system 7, and the like as its main portions.

The fuel supply system 2 is configured including a supply pump 21, a common rail 22, injectors (fuel injection valves) 23, a cutoff valve 24, a fuel addition valve 26, an engine fuel path 27, an added fuel path 28, and the like.

The supply pump 21 draws fuel from a fuel tank, and after putting the drawn fuel under high pressure, supplies the fuel to the common rail 22 via the engine fuel path 27. The common rail 22 has the functionality of an accumulation chamber in which the high pressure fuel supplied from the supply pump 21 is held (accumulated) at a predetermined pressure, and this accumulated fuel is distributed to the injectors 23. The injectors 23 are configured from piezo injectors within which a piezoelectric element (piezo element) is provided, and supply fuel by injection into the combustion chambers 3 by appropriately opening a valve. Details of the control of fuel injection from the injectors 23 will be described later.

Also, the supply pump 21 supplies part of the fuel drawn from the fuel tank to the fuel addition valve 26 via the added fuel path 28. In the added fuel path 28, the cutoff valve 24 is provided in order to stop fuel addition by cutting off the added fuel path 28 during an emergency.

The fuel addition valve 26 is configured from an electronically controlled opening/closing valve whose valve opening period is controlled by an addition control operation performed by an ECU 100 that will be described later, such that the amount of fuel added to the exhaust system 7 becomes a target addition amount (an addition amount such that exhaust A/F becomes a target A/F), and such that a fuel addition timing becomes a predetermined timing. In other words, a desired amount of fuel is supplied from the fuel addition valve 26 by injection to the exhaust system 7 (to an exhaust manifold 72 from exhaust ports 71) in accordance with appropriate timing.

The intake system 6 is provided with an intake manifold 63 connected to an intake port 15a formed in a cylinder head 15 (see FIG. 2), and an intake pipe 64 that constitutes an intake path is connected to the intake manifold 63. Also, in this intake path, an air cleaner 65, an air flow meter 43, and a throttle valve (intake throttle valve) 62 are disposed in the stated order from the upstream side. The air flow meter 43 outputs an electrical signal according to the amount of air that flows into the intake path via the air cleaner 65.

Also, in the intake system 6, a swirl control valve 66 is provided in order to vary swirl flow (horizontal swirl flow) in the combustion chambers 3 (see FIG. 2). Specifically, each cylinder is provided with two ports, namely a normal port and a swirl port, as the intake port 15a, and the swirl control valve 66, which is constituted by a butterfly valve whose opening degree is adjustable, is disposed in the normal port 15a shown in FIG. 2. The swirl control valve 66 is linked to an actuator (not shown), and the flow rate of air passing through the normal port 15a can be changed according to the opening degree of the swirl control valve 66, which is adjusted by driving the actuator. The greater the opening degree of the swirl control valve 66 is, the greater the amount of air that flows from the normal port 15a into the cylinder is. For this reason, swirl generated by the swirl port (not shown in FIG. 2) becomes relatively weak, and a low swirl condition is achieved in the cylinder. On the contrary, the smaller the opening degree of the swirl control valve 66 is, the lower the amount of air that flows from the normal port 15a into the cylinder is. For this reason, swirl generated by the swirl port does not become relatively weak, and a high swirl condition is achieved in the cylinder.

The exhaust system 7 is provided with the exhaust manifold 72 connected to the exhaust ports 71 formed in the cylinder head 15, and exhaust pipes 73 and 74 that constitute an exhaust path are connected to the exhaust manifold 72. Also, in this exhaust path, a maniverter (exhaust purification apparatus) 77 is disposed that is provided with a NOx storage catalyst (NSR catalyst: NOx Storage Reduction catalyst) 75 and a DPNR catalyst (Diesel Particulate-NOx Reduction catalyst) 76. The following describes the NSR catalyst 75 and the DPNR catalyst 76.

The NSR catalyst 75 is a storage reduction NOx catalyst and is composed using, for example, alumina ($Al_2O_3$) as a support, with, for example, an alkali metal such as potassium (K), sodium (Na), lithium (Li), or cesium (Cs), an alkaline earth element such as barium (Ba) or calcium (Ca), a rare earth element such as lanthanum (La) or yttrium (Y), and a precious metal such as platinum (Pt) supported on this support.

In a state in which a large amount of oxygen is present in exhaust gas, the NSR catalyst 75 stores NOx, and in a state in which the oxygen concentration in exhaust gas is low, and furthermore a large amount of reduction component (e.g., an unburned component of fuel (HC)) is present, the NSR catalyst 75 reduces NOx to $NO_2$ or NO and releases the resulting $NO_2$ or NO. NOx that has been released as $NO_2$ or NO is further reduced due to quickly reacting with HC or CO in exhaust gas and becomes $N_2$. Also, by reducing $NO_2$ or NO, HC and CO themselves are oxidized and thus become $H_2O$ and $CO_2$. In other words, by suitably adjusting the oxygen concentration or the HC component in exhaust gas introduced into the NSR catalyst 75, it is possible to purify HC, CO, and NOx in the exhaust gas. In the configuration of the present embodiment, adjustment of the oxygen concentration or the HC component in exhaust gas can be performed with an operation for adding fuel from the fuel addition valve 26.

On the other hand, in the DPNR catalyst 76, a NOx storage reduction catalyst is supported on a porous ceramic structure, for example, and PM in exhaust gas is captured while passing through a porous wall. When the air-fuel ratio of the exhaust gas is lean, NOx in the exhaust gas is stored in the NOx storage reduction catalyst, and when the air-fuel ratio is rich, the stored NOx is reduced and released. Furthermore, a catalyst that oxidizes/burns the captured PM (e.g., an oxidization catalyst whose main component is a precious metal such as platinum) is supported on the DPNR catalyst 76.

The following describes the combustion chamber 3 of the diesel engine and its surroundings with reference to FIG. 2. As shown in FIG. 2, in a cylinder block 11 that constitutes part of the engine, a cylindrical cylinder bore 12 is formed in each cylinder (each of four cylinders), and a piston 13 is housed within each cylinder bore 12 such that the piston 13 can slide vertically.

The combustion chamber 3 is formed on the top side of a top face 13a of the piston 13. In other words, the combustion chamber 3 is defined by a lower face of the cylinder head 15 installed on top of the cylinder block 11 via a gasket 14, an inner wall face of the cylinder bore 12, and the top face 13a of the piston 13. A cavity (recess) 13b is provided in substantially the center of the top face 13a of the piston 13, and this cavity 13b also constitutes part of the combustion chamber 3.

Note that the cavity 13b is shaped such that the dimensions of the recess are small in the center portion (on a cylinder centerline P) and increase toward the outer peripheral side. In other words, when the piston 13 is near compression top dead center as shown in FIG. 2, the space in the combustion chamber 3 formed by the cavity 13b is small with a relatively low volume in the center portion, and gradually increases toward to the outer peripheral side (becomes large).

A small end 18a of a connecting rod 18 is linked to the piston 13 by a piston pin 13c, and a large end of the connecting rod 18 is linked to a crankshaft that is an engine output shaft. Thus, back and forth movement of the piston 13 within the cylinder bore 12 is transmitted to the crankshaft via the connecting rod 18, and engine output is obtained due to rotation of this crankshaft. Also, a glow plug 19 is disposed facing the combustion chamber 3. The glow plug 19 glows due to the flow of electrical current immediately before the engine 1 is started, and functions as a starting assistance apparatus whereby ignition and combustion are promoted due to part of a fuel spray being blown onto the glow plug.

Disposed in the cylinder head 15 are the intake port 15a that introduces air into the combustion chamber 3 and the exhaust port 71 that discharges exhaust gas from the combustion chamber 3, as well as an intake valve 16 that opens/closes the intake port 15a and an exhaust valve 17 that opens/closes the exhaust port 71. The intake valve 16 and the exhaust valve 17 are disposed facing each other on either side of the cylinder centerline P. That is, this engine 1 is configured as a cross how-type engine. Also, the injector 23 that injects fuel directly into the combustion chamber 3 is installed in the cylinder head 15. The injector 23 is disposed substantially in the center above the combustion chamber 3, in an erect orientation along the cylinder centerline P, and injects fuel introduced from the common rail 22 toward the combustion chamber 3 in accordance with a predetermined timing.

Furthermore, as shown in FIG. 1, the engine 1 is provided with a turbocharger 5. This turbocharger 5 is provided with a turbine wheel 52 and a compressor wheel 53 that are linked via a turbine shaft 51. The compressor wheel 53 is disposed facing the inside of the intake pipe 64, and the turbine wheel 52 is disposed facing the inside of the exhaust pipe 73. Thus the turbocharger 5 uses exhaust flow (exhaust pressure) received by the turbine wheel 52 to rotate the compressor wheel 53, thereby performing a so-called supercharging operation that increases the intake pressure. In the present embodiment, the turbocharger 5 is a variable nozzle-type turbocharger, in which a variable nozzle vane mechanism (not shown) is provided on the turbine wheel 52 side, and by adjusting the opening degree of this variable nozzle vane mechanism it is possible to adjust the supercharging pressure of the engine 1.

An intercooler 61 for forcibly cooling intake air heated due to supercharging with the turbocharger 5 is provided in the intake pipe 64 of the intake system 6. The throttle valve 62 provided on the downstream side from the intercooler 61 is an electronically controlled opening/closing valve whose opening degree can be steplessly adjusted, and has a function of constricting the area of the channel of intake air under a predetermined condition, and thus adjust (reduce) the amount of intake air supplied.

Also, the engine 1 is provided with an exhaust gas recirculation path (EGR path) 8 that connects the intake system 6 and the exhaust system 7. The EGR path 8 reduces the combustion temperature by appropriately directing part of the exhaust gas back to the intake system 6 and resupplying that exhaust gas to the combustion chamber 3, thus reducing the amount of NOx produced. Also, provided in the EGR path 8 are an EGR valve 81 that by being opened/closed steplessly under electronic

control is capable of freely adjusting the flow rate of exhaust gas that flows through the EGR path 8, and an EGR cooler 82 for cooling exhaust that passes through (recirculates through) the EGR path 8. The EGR apparatus (exhaust gas recirculation apparatus) is constituted by the EGR path 8, the EGR valve 81, the EGR cooler 82, and the like.

- Sensors -

Various sensors are installed at respective sites of the engine 1, and these sensors output signals related to environmental conditions at the respective sites and the operating state of the engine 1.

For example, the air flow meter 43 outputs a detection signal according to the flow rate of intake air (the amount of intake air) on the upstream side of the throttle valve 62 within the intake system 6. An intake temperature sensor 49 is disposed in the intake manifold 63 and outputs a detection signal according to the temperature of intake air. An intake pressure sensor 48 is disposed in the intake manifold 63 and outputs a detection signal according to the intake air pressure. An A/F (air-fuel ratio) sensor 44 outputs a detection signal that changes in a continuous manner according to the oxygen concentration in exhaust gas on the downstream side of the maniverter 77 of the exhaust system 7. An exhaust temperature sensor 45 likewise outputs a detection signal according to the temperature of exhaust gas (exhaust temperature) on the downstream side of the maniverter 77 of the exhaust system 7. A rail pressure sensor 41 outputs a detection signal according to the pressure of fuel accumulated in the common rail 22. A throttle opening degree sensor 42 detects the opening degree of the throttle valve 62.

- ECU -

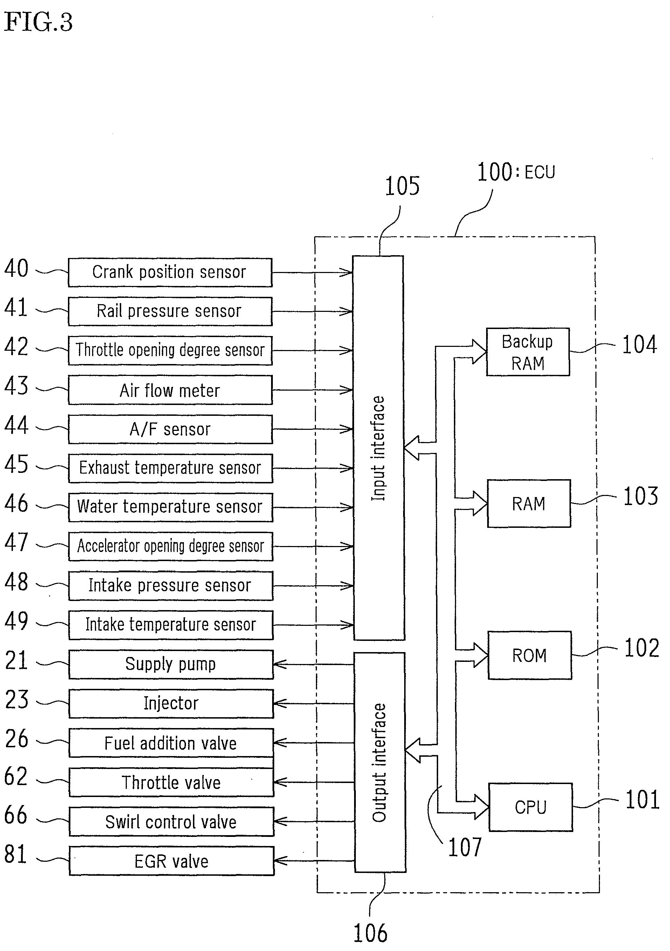

As shown in FIG. 3, the ECU 100 is provided with a CPU 101, a ROM 102, a RAM 103, a backup RAM 104, and the like. Stored in the ROM 102 are various control programs, maps that are referenced when executing those various control programs, and the like. The CPU 101 executes various types of arithmetic processing based on the various control programs and maps stored in the ROM 102. The RAM 103 is a memory that temporarily stores data resulting from computation with the CPU 101 or data that has been input from the respective sensors. The backup RAM 104 is a nonvolatile memory that stores that data or the like to be saved when the engine 1 is stopped, for example.

The CPU 101, the ROM 102, the RAM 103, and the backup RAM 104 are connected to each other via a bus 107, and are connected to an input interface 105 and an output interface 106 via the bus 107.

The input interface 105 is connected to the rail pressure sensor 41, the throttle opening degree sensor 42, the air flow meter 43, the A/F sensor 44, the exhaust temperature sensor 45, the intake pressure sensor 48, and the intake temperature sensor 49. Furthermore, the input interface 105 is connected to a water temperature sensor 46 that outputs a detection signal according to the coolant temperature of the engine 1, an accelerator opening degree sensor 47 that outputs a detection signal according to the amount of accelerator pedal depression, a crank position sensor 40 that outputs a detection signal (pulse) each time the output shaft (crankshaft) of the engine 1 rotates a specific angle, and the like.

On the other hand, the output interface 106 is connected to the supply pump 21, the injectors 23, the fuel addition valve 26, the throttle valve 62, the swirl control valve 66, the EGR valve 81, and the like.

The ECU 100 executes various types of control of the engine 1 based on output from the various types of sensors described above, calculation values obtained by an arithmetic expression using such output values, and the various types of maps stored in the ROM 102.

For example, the ECU 100 executes fuel injection control on the injector 23. In the present embodiment, this fuel injection control on the injector 23 is described taking the example of executing main injection only one time in order to simplify the description. In other words, a description will be given in which there is no execution of auxiliary injection such as pilot injection, pre-injection, after-injection, and post-injection, which are executed in conventional ordinary diesel engines. Also, in the below description, there is no execution of divided main injection either, in which main injection is performed intermittently over a plurality of times. Note that the present invention is also applicable to a diesel engine in which such auxiliary injection and divided main injection are executed.

The fuel injection amount in the above-described main injection is basically set as the fuel injection amount necessary for obtaining the required torque, which is determined according to environmental conditions and operating conditions such as engine speed, accelerator operation amount, coolant temperature, and intake air temperature. For example, the greater the engine speed (engine speed calculated based on the detection value from the crank position sensor 40) or the greater the accelerator operation amount (the accelerator pedal depression amount detected by the accelerator opening degree sensor 47) (i.e., the greater the accelerator opening degree), the greater the resulting torque requirement value of the engine 1, and the greater the fuel injection amount is accordingly set.

With the present embodiment, as will be described later, input heat amount adjustment control is executed in order to adjust the amount of heat input to the combustion chamber 3, and along with the execution of the input heat amount adjustment control, the input heat amount is set within a range according to which the amount of fuel actually injected from the injector 23 is limited so as to be less than or equal to a maximum fuel injection amount (a fuel injection amount specified such that the input heat amount is caused to be less than or equal to a maximum value, which is described later).

Specifically, if the fuel injection amount necessary for obtaining the required torque is less than or equal to the fuel injection amount specified in the input heat amount adjustment control (a fuel injection amount specified such that the input heat amount is caused to be less than or equal to the maximum value), that necessary fuel injection amount is used as the actual fuel injection amount when fuel is injected from the injector 23. On the contrary, if the fuel injection amount necessary for obtaining the required torque exceeds the fuel injection amount specified in the input heat amount adjustment control, the actual fuel injection amount is limited to the fuel injection amount specified in the input heat amount adjustment control when fuel is injected from the injector 23. Details of the operation for adjusting the fuel injection amount (maximum fuel injection amount specification operation) in this input heat amount adjustment control will be described later (will be described later in the first embodiment).

The ECU 100 also adjusts the amount (EGR amount) of exhaust gas that is recirculated toward to the intake manifold 63 by controlling the opening degree of the EGR valve 81 in accordance with the operating state of the engine 1. The EGR amount is set in accordance with an EGR map that is stored in the ROM 102 in advance. Specifically, the EGR map is a map for determining the EGR amount (EGR rate) using the engine speed and the engine load as parameters. Note that the EGR map is created in advance through experimentation, simulation, or the like. In other words, the EGR amount (opening degree of the EGR valve 81) is obtained by applying, to the EGR map, the engine speed calculated based on the detection value from the crank position sensor 40 and the opening degree of the throttle valve 62 (corresponding to the engine load) detected by the throttle opening degree sensor 42.

The ECU 100 also adjusts the EGR amount by controlling the opening degree of the EGR valve 81 through the later-described input heat amount adjustment control as well. Details of the operation for adjusting the EGR amount in this input heat amount adjustment control will be described later (will be described later in the second embodiment).

The ECU 100 furthermore executes opening degree control on the swirl control valve 66. The opening degree control executed on the swirl control valve 66 is performed so as to change the amount of circumferential movement in a cylinder per unit time (or per unit of crank rotation angle) of a spray of fuel injected into the combustion chamber 3. For example, as will be described later, along with the execution of the input heat amount adjustment control, the condition of the swirl flow in the combustion chamber 3 is changed (e.g., changed from a low swirl condition to a high swirl condition) by changing the opening degree of the swirl control valve 66. Details of the control of the opening degree of the swirl control valve 66 in this input heat amount adjustment control will be described later (will be described later in the fifth embodiment).

- Fuel injection pressure -

The fuel injection pressure when executing the main injection is determined based on the internal pressure of the common rail 22. In regard to the internal pressure of the common rail, normally, the higher the engine load and the greater the engine speed, the greater the target value for the pressure of fuel supplied from the common rail 22 to the injectors 23 (i.e., the target rail pressure). Specifically, when the engine load is high, a large amount of air is drawn into the combustion chamber 3, making it necessary to inject a large amount of fuel from the injectors 23 into the combustion chamber 3, and therefore the pressure of injection from the injectors 23 needs to be high. Also, when the engine speed is high, the period during which injection is possible is short, making it necessary to inject a large amount of fuel per unit time, and therefore the pressure of injection from the injectors 23 needs to be high. In this way, the target rail pressure is normally set based on the engine load and the engine speed. Note that the target rail pressure is set in accordance with, for example, a fuel pressure setting map stored in the ROM 102. Specifically, the valve opening period (injection rate waveform) of the injectors 23 is controlled through determining the fuel pressure according to this fuel pressure setting map, thus enabling the amount of fuel injected during the valve opening period to be specified.

The optimum values of fuel injection parameters in the main injection differ according to the temperature conditions of the engine 1, intake air, and the like.

For example, the ECU 100 adjusts the amount of fuel discharged by the supply pump 21 such that the common rail pressure becomes the same as the target rail pressure set based on the engine operating state, that is to say, such that the fuel injection pressure matches the target injection pressure.

Also, as will be described later, the fuel injection pressure is also changed to an optimum value (e.g., the fuel injection pressure is corrected to a higher pressure) along with the execution of the input heat amount adjustment control. Details of the operation for adjusting the fuel injection pressure in this input heat amount adjustment control will be described later (will be described later in the second embodiment and fifth embodiment).

- Brief description of combustion forms -

Next is a brief description of forms of combustion in the combustion chamber 3 in the engine 1 of the present embodiment.

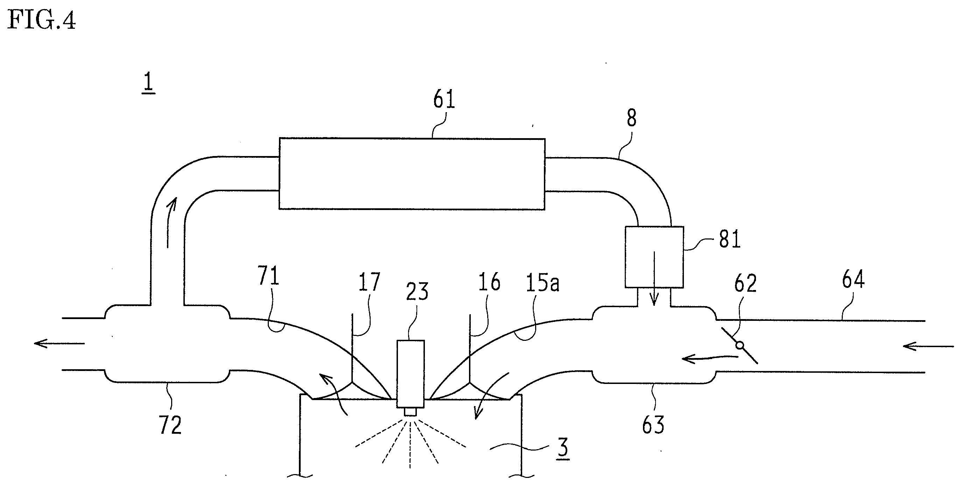

FIG. 4 schematically shows how gas is drawn into one of the cylinders of the engine 1 through the intake manifold 63 and the intake port 15a, combustion is performed using fuel injected from the injector 23 into the combustion chamber 3, and the combusted gas is discharged to the exhaust manifold 72 via the exhaust port 71.

As shown in FIG. 4, the gas drawn into the cylinder includes fresh air drawn in from the intake pipe 64 through the throttle valve 62, and EGR gas drawn in from the EGR path 8 in the case where the EGR valve 81 has been opened. The proportion (i.e., the EGR rate) of the amount (mass) of EGR gas drawn in to the sum of the amount (mass) of fresh air drawn in and the EGR gas amount changes according to the opening degree of the EGR valve 81, which is appropriately controlled by the ECU 100 in accordance with the operating state.

In this way, the fresh air and the EGR gas drawn into the cylinder becomes in-cylinder gas that is drawn into the cylinder via the intake valve 16 that is open in the intake stroke, along with the descent of the piston 13 (not shown in FIG. 4). Due to the intake valve 16 closing at the valve closing time, which is determined according to the operating state of the engine 1, the in-cylinder gas is sealed inside the cylinder, and is compressed along with the ascent of the piston 13 in the subsequent compression stroke. When the piston 13 then reaches the vicinity of top dead center, fuel is injected directly into the combustion chamber 3 by the injector 23 being opened for only a predetermined time according to the injection amount control executed by the ECU 100 described above.

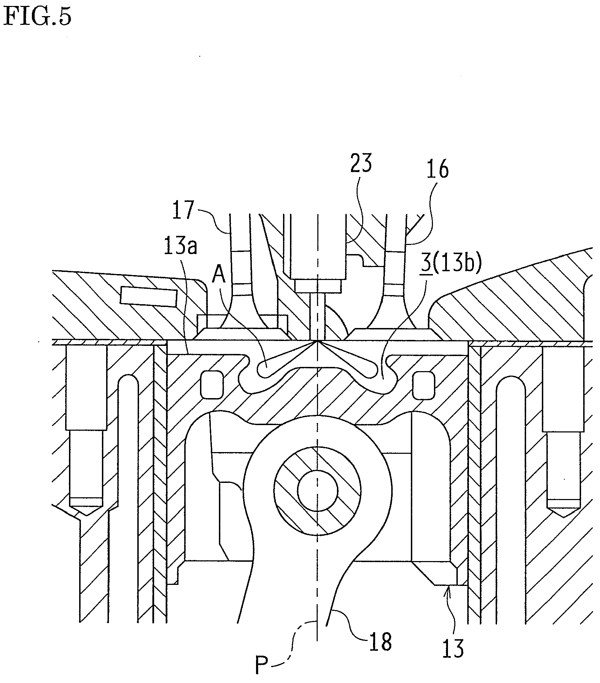

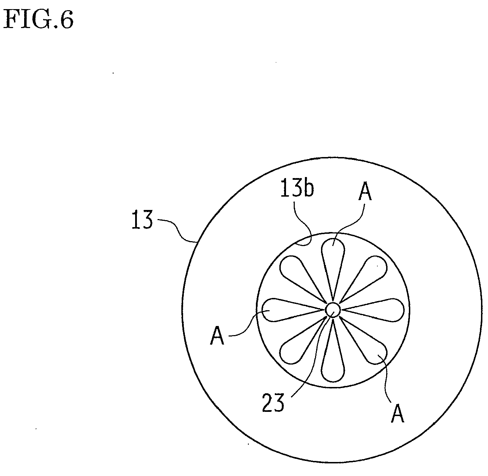

FIG. 5 is a cross-sectional diagram showing the combustion chamber 3 and its surroundings during this fuel injection, and FIG. 6 is a plan view (diagram showing the upper face of the piston 13) of the combustion chamber 3 during this fuel injection. As shown in FIG. 6, the injector 23 of the engine 1 of the present embodiment is provided with eight holes at equal intervals along the circumferential direction, and fuel is injected from the holes in a uniform manner. Note that the number of holes is not limited to being eight.

Sprays A of fuel injected from each of the holes disperse in a substantially conical manner. Also, since the injection of fuel from the holes is performed at the point in time when the piston 13 reaches the vicinity of top dead center, the fuel sprays A disperse inside the cavity 13b as shown in FIG. 5.

In this way, the sprays A of fuel injected from the holes formed in the injector 23 form an air-fuel mixture as they mix with intake gas over time, and then respectively disperse in a conical manner inside the cylinder and combust due to self-ignition. In other words, the fuel sprays A each form a substantially conical combustion field along with in-cylinder gas, and combustion respectively starts in each combustion field (combustion fields at eight places in the present embodiment).

The energy generated by this combustion then becomes kinetic energy for pressing the piston 13 down toward bottom dead center (energy that is to serve as engine output), thermal energy for raising the temperature in the combustion chamber 3, and thermal energy that is dissipated to the outside (e.g., coolant) via the cylinder block 11 and the cylinder head 15.

The combusted in-cylinder gas then becomes exhaust gas that is discharged to the exhaust port 71 and the exhaust manifold 72 via the exhaust valve 17 that opens in the exhaust stroke, along with the ascent of the piston 13.

- Combustion temperature in combustion field -

There are various factors that influence the combustion temperature (flame temperature) when the air-fuel mixture combusts inside the combustion chamber 3 as described above. Examples include the volume $V_c(\alpha)$ of the combustion field in which fuel is combusting inside the combustion chamber 3 (the space in which the air-fuel mixture exists and is combusting, which is the conical space described above), the temperature before the start of the combustion of the air-fuel mixture in the combustion field (e.g., the temperature $Th\alpha$ of the air-fuel mixture at a timing immediately after the start of the fuel injection, but before combustion has started), the density $\rho$ of the gas in the combustion field (the air-fuel mixture before the start of combustion), and the specific heat $\sigma$ of the gas in the combustion field (the air-fuel mixture before the start of combustion).

Then a target value $T_N$ for the flame temperature in the combustion field is provided, and the combustion period from when the combustion of the fuel injected in the main injection starts until it ends is partitioned into many micro-periods (e.g., periods of several $\mu$sec). Also, the amount of heat input to the combustion chamber 3 is specified in each of the micro-periods such that the temperature of the combustion field in each of the micro-periods becomes the combustion field target temperature $T_N$. The flame temperature is then made appropriate by controlling the fuel injection amount or the like such that the input heat amount is caused to be the maximum value, that is to say, such that the amount of heat $Q(\alpha)$ actually input to the combustion chamber 3 is caused to be less than or equal to the maximum value.

The following is a specific description of the micro-periods and the factors.

(Micro-periods and representative values therein)

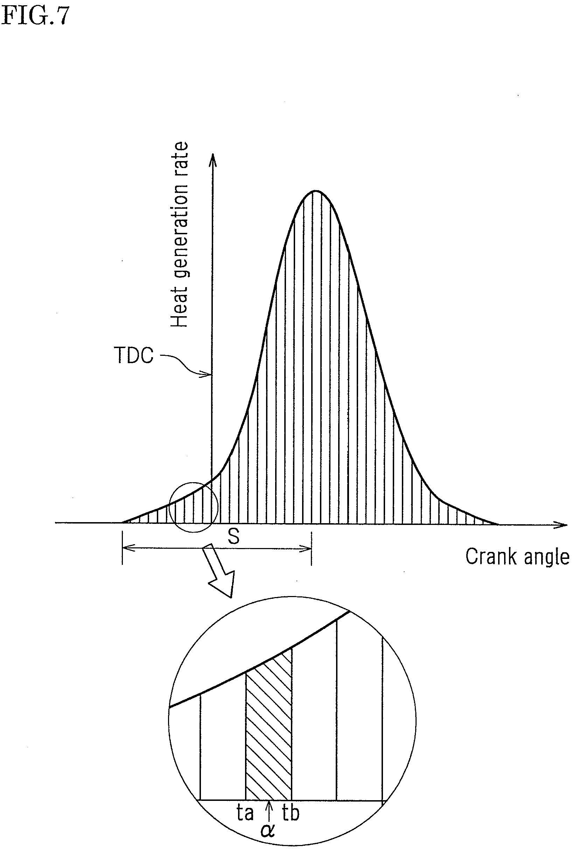

As shown in FIG. 7 (diagram showing the relationship between crank angle and heat generation rate in the combustion fields as a whole (the eight combustion fields) in the combustion chamber 3) for example, the combustion period is partitioned many times in the time-axis direction as the micro-periods for specifying the amount of heat input to the combustion chamber 3, and setting is performed so as to specify the input heat amount in each of the micro-periods.

In FIG. 7, the horizontal axis indicates the crank angle, the vertical axis indicates the heat generation rate, and the ideal heat generation rate waveform for the combustion of fuel injected in main injection is shown. In FIG. 7, "TDC" indicates a crank angle position corresponding to the compression top dead center of the piston 13. In this heat generation rate waveform, for example, the combustion of fuel injected in main injection is started when the piston 13 is before the compression top dead center (BTDC), the heat generation rate reaches its maximum value (peak value) at a predetermined piston position after the compression top dead center (e.g., a point 10° after the compression top dead center (10° ATDC)), and furthermore the combustion of fuel injected in main injection ends at another predetermined piston position after the compression top dead center (e.g., a point 25° after the compression top dead center (25° ATDC)). Note that the heat generation rate waveform is not limited to this.

In the following description, in the case where the period from times ta to tb in FIG. 7 (the cross-hatched period in FIG. 7) is used as the micro-period, for example, the representative value for the crank angle in this period is assumed to "$\alpha$". This "$\alpha$" is, for example, the median value of this period (the period from ta to tb), and $\alpha$ is given by an arithmetic expression such as $\alpha=(ta+tb)/2$. In other words, in order to consider the later-described "combustion field volume $V_c(\alpha)$" to be constant in the micro-period, the median value is represented in the micro-period.

Note that the length of the micro-period (or the number of partitions of the combustion period) is arbitrary, and the shorter the length of the periods is set (the greater the number of partitions that are set in the combustion period), the higher the precision can be in the calculation of the later-described allowable input heat amount (maximum value of input heat amount $Q(\alpha)$). Also, the micro-period can be set as the interval at which the crankshaft rotates a very small crank angle (e.g., 0.5° CA).

(Volume of combustion field)

If the ignition delay period in the diffusion combustion of diesel combustion is assumed to be "0", the volume of the combustion field in which fuel is combusting inside the combustion chamber 3 (the space in which the air-fuel mixture exists and is combusting, which is the eight conical spaces described above) (hereinafter, referred to as simply the combustion field volume $V_c(\alpha)$) can be considered to be the volume occupied by the spray of fuel injected in that time period (the total volume of the eight conical spaces).

For this reason, the combustion field volume $V_c(\alpha)$ can be obtained from the penetration and spray spread angle that are obtained, which are influenced by, for example, the number and diameter of the holes of the injector 23, and the fuel injection pressure and fuel properties.

For example, the combustion field volume $V_c(\alpha)$ is obtained by storing, in the ROM 102 in advance, a map or arithmetic expression for obtaining the combustion field $V_c(\alpha)$ using the number and diameter of the holes of the injector 23, the fuel injection pressure, and the fuel properties as parameters. In this case, the fuel injection pressure is set based on the engine load, engine speed, and the like as described above. The fuel injection pressure for obtaining the combustion field volume $V_c(\alpha)$ is, for example, the detection value detected by the rail pressure sensor 41, or is read out from the fuel pressure setting map stored in the ROM 102 in advance.

Note that since in actuality there is the possibility of a delay in the ignition of the spray, the combustion field volume $V_c(\alpha)$ can be obtained with even higher precision if that fact is taken into consideration. For example, multiplying the combustion field volume obtained from the above-described map or arithmetic expression by a predetermined correction coefficient (e.g., 0.8) enables obtaining a combustion field volume $V_c(\alpha)$ that takes ignition delay into consideration. It is possible to, for example, change the correction coefficient according to the in-cylinder temperature (e.g., the later-described temperature before the start of combustion), such as changing the correction coefficient so as to have a higher value as the in-cylinder temperature increases, within the range of 0.5 to 1.0.

(Temperature before start of combustion)

The temperature before the start of combustion of the air-fuel mixture in the combustion field (hereinafter, referred to as simply the temperature before start of combustion Th$\alpha$) is the temperature of the air-fuel mixture in the combustion field at the time when fuel injection was performed.

For example, at the time when the compression stroke of the engine 1 starts, the intake valve 16 is generally closed when the piston 13 reaches the vicinity of bottom dead center, and there is no flow of new gas into or out of the cylinder until the subsequent injection of fuel from the injector 23. For this reason, the temperature of the gas in the combustion chamber 3 in the vicinity of compression top dead center (the temperature before start of combustion Th$\alpha$) is determined according to the condition of the in-cylinder gas when the intake valve 16 is closed.

Accordingly, the temperature before start of combustion Th$\alpha$ can be obtained by storing in the ROM 102 a map or arithmetic expression (generally an adiabatic compression expression) for obtaining the temperature before start of combustion Th$\alpha$ using, for example, the compression ratio of the engine 1 or the in-cylinder gas temperature when the intake valve 16 is closed as a parameter. In this case, the in-cylinder gas temperature when the intake valve 16 is closed can be the detection value detected by the intake temperature sensor 49, or can be read out from an intake temperature estimation map (map for estimating the intake temperature from the outside air temperature, engine operation condition, or the like) stored in the ROM 102 in advance.

(Density of air-fuel mixture)

The density of the air-fuel mixture in the combustion field before the start of combustion (hereinafter, referred to as simply the air-fuel mixture density p), can be calculated from the amount of gas in the cylinder when the intake valve 16 is closed, and the mass of the fuel in the combustion field volume $V_c(\alpha)$. Also, a map for obtaining the air-fuel mixture density p from the amount of gas in the cylinder when the intake valve 16 is closed and the mass of the fuel in the combustion field volume $V_c(\alpha)$ may be stored in the ROM 102, and the air-fuel mixture density p may be obtained using such map.

(Specific heat of combustion gas)

The specific heat of the gas in the combustion field before the start of combustion (hereinafter, referred to as simply the combustion gas specific heat $\sigma$) is the specific heat of the air-fuel mixture in the combustion field volume $V_c(\alpha)$ obtained by the specific heats of the gas component and liquid-phase substance constituting the air-fuel mixture density p. In this case as well, the combustion gas specific heat $\sigma$ is obtained by storing in the ROM 102 a map or arithmetic expression for obtaining the combustion gas specific heat $\sigma$ using the air-fuel mixture density $\rho$ or the like as a parameter.

(Combustion field target temperature)

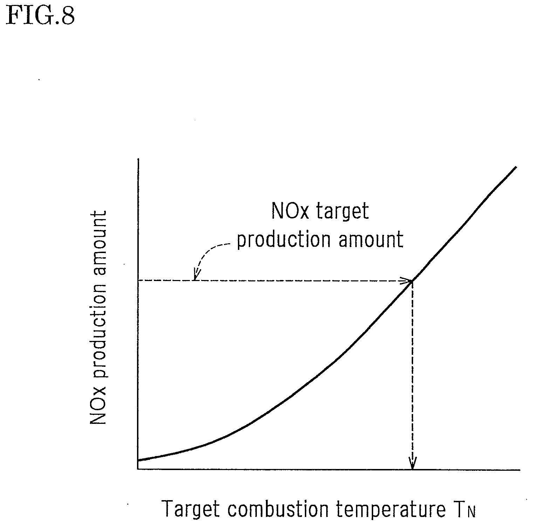

The combustion field target temperature $T_N$ is the temperature of the combustion gas set for causing the amount of NOx produced along with the combustion of fuel to be the target production amount set in advance. In other words, since the amount of NOx produced is correlated with the combustion temperature (flame temperature) in the combustion field, the target combustion temperature setting map shown in FIG. 8 for example is stored in the ROM 102, and the combustion field target temperature $T_N$ is obtained from the target NOx production amount (upper limit value of the allowable NOx production amount). Once the allowable NOx production amount has been set as the target production amount according to this target combustion temperature setting map, the combustion field target temperature $T_N$ can be easily obtained.

Also, if a predetermined constant value is set as the target NOx production amount, there is no need to store the target combustion temperature setting map in the ROM 102, and a constant value can also be determined for the combustion field target temperature $T_N$ for achieving the constant value used as the target NOx production amount. For example, 2500 K is set as the combustion field target temperature $T_N$. The combustion field target temperature $T_N$ is not limited to this value.

- Calculation of input heat amount -

Next is a description of an operation for calculating the maximum value of the amount of heat $Q(\alpha)$ input to the combustion chamber 3, which is one feature of the present embodiment. The maximum value of the input heat amount $Q(\alpha)$ obtained here is obtained in order to specify the air-fuel mixture in the combustion chamber 3 such that the amount of NOx produced during combustion is caused to be less than or equal to a predetermined amount (less than or equal to the NOx target production amount). In other words, using the input heat amount $Q(\alpha)$ obtained here as the maximum value when inputting the heat amount to the combustion chamber 3 enables suppressing the amount of NOx produced in the combustion stroke so as to be less than or equal to the NOx target production amount.

Firstly, in view of the general relationship of heat capacity, the relational expression of the heat generation rate by the combustion of fuel injected from one hole at a certain moment (the above-described micro-period) is defined as in Expression (1) below.

[Exp 1]

$$\frac{dQ}{dt} = \rho(t) V_L(i,t) \sigma(t) \frac{dT}{dt} \cdots (1)$$

Here, p(t) is the density of the combustion space at time t (the time in one of the micro-periods), $V_L(i,t)$ is the volume of the combustion space in the i-th combustion period (the i-th one of the partitioned micro-periods) corresponding to the time t, and $\sigma(t)$ is the definite integral specific heat in the volume $V_L(i,t)$ of the combustion space in the i-th combustion period corresponding to the time t.

Letting $V_c(t)$ be the total amount of the combustion space in which combustion is taking place at the time t gives Expression (2) below.
[Exp 2]

$$V_C(t) = \sum_{i=1}^{N} V_L(i,t) \quad \cdots \quad (2)$$

Here, N is the total number of partitions obtaining the micro-periods.

Transforming Expression (1) above with respect to temperature change using Expression (2) or the like gives Expression (3) below.
[Exp 3]

$$\frac{dT}{dt}(i,t) = \frac{1}{\rho(t)V_L(i,t)\sigma(t)} \cdot \frac{dQ}{dt}(i,t) \quad \cdots \quad (3)$$

For each unit of combustion, if there is fuel in the spray that is combusting at time $\alpha$, the temperature after the combustion is obtained by an integral of Expression (3), as shown in Expression (4) below.
[Exp 4]

$$T(i,\alpha) = Th_\alpha + \int \frac{1}{\rho(t)V_L(i,t)\sigma(t)} \cdot \frac{dQ}{dt}(i,t)dt \quad \cdots \quad (4)$$

Here, T(i,$\alpha$) is the temperature of the spray after combustion in the i-th micro-period (median value $\alpha$), and Th$\alpha$ is the gas temperature before the combustion of the air-fuel mixture containing the spray combusting in the i-th combustion period.

Since dt is very small here, p(t) and $V_L$(i,t) can be considered to be constant at time $\alpha$ and in the small periods of time therebefore and thereafter. This obtains Expression (5) below.
[Exp 5]

$$T(i,\alpha) = Th_\alpha + \frac{1}{\rho(\alpha)V_L(i,\alpha)\sigma(\alpha)} \int \frac{dQ}{dt}(i,t)dt \quad \cdots \quad (5)$$

Furthermore, if an integral of the latter half of Expression (5) is taken with respect to the heat generation amount, Expression (6) below is obtained.
[Exp 6]

$$T(i,\alpha) = Th_\alpha + \frac{1}{\rho(\alpha)V_L(i,\alpha)\sigma(\alpha)} Q(i,\alpha) \quad \cdots \quad (6)$$

Here, letting the amount of rise in temperature in the micro-period be $\Delta$T(i,$\alpha$), Expression (7) below is obtained.
[Exp 7]

$$\Delta T(i,\alpha) = T(i,\alpha) - Th_\alpha = \frac{1}{\rho(\alpha)V_L(i,\alpha)\sigma(\alpha)} Q(i,\alpha) \quad \cdots \quad (7)$$

Here, by adding the individual temperatures and volumes of the sprays, the rise in temperature of the combustion area (combustion field) as a whole is obtained by Expression (8) below.

[Exp 8]

$$\Delta T(\alpha) = \sum_{j=1}^{M} \Delta T(i,\alpha,j) = \frac{\sum_{j=1}^{M} \Delta T(j) \cdot V_L(i,\alpha,j)}{V_C(\alpha)} = \frac{1}{\rho(\alpha)\sigma(\alpha)V_C(\alpha)} \sum_{j=1}^{M} Q(i,\alpha,j) \quad \cdots (8)$$

Here, M is the number of holes in the injector 23 ("8" in the present embodiment).
[Exp 9]

$$Q(\alpha) = \sum_{j=1}^{M} Q(i,\alpha,j) \quad \cdots (9)$$

Also, if the above is defined and Q($\alpha$) is the amount of heat input in the targeted time, Expression (10) below is obtained.
[Exp 10]

$$\Delta T(i,\alpha,j) = \frac{1}{\rho(\alpha)\sigma(\alpha)V_C(\alpha)} Q(\alpha) \quad \cdots (10)$$

Here, the amount of NOx produced is determined by the combustion temperature, and therefore suppressing the NOx production amount to less than or equal to a desired value (less than or equal to the target NOx production amount) is conditional upon setting the target combustion temperature $T_N$ and satisfying Th$\alpha$+$\Delta T(i,\alpha,j) \leq T_N$. Applying this to Expression (10) gives Expression (11) below.
[Exp 11]

$$\Delta T(i,\alpha,j) = \frac{1}{\rho(\alpha)\sigma(\alpha)V_C(\alpha)} Q(\alpha) \leq T_N - Th_\alpha \quad \cdots (11)$$

Transforming Expression (11) obtains Expression (12) below for obtaining the maximum value of the input heat amount Q($\alpha$).
[Exp 12]

$$Q(\alpha) \leq \rho(\alpha)\sigma(\alpha)V_C(\alpha)(T_N - Th_\alpha) \quad \cdots (12)$$

Specifically, by specifying the maximum value of the input heat amount Q($\alpha$) using Expression (12), and setting the input heat amount Q($\alpha$) on the left-hand side in Expression (12) so as to be less than or equal to the value of the right-hand side, it is possible to suppress the NOx production amount so as to be less than or equal to a predetermined value (less than or equal to the NOx target production amount) (i.e., the input heat amount adjustment operation can be performed by the input heat amount adjustment unit). In other words, by applying Expression (12) to each of the micro-periods, in each of the micro-periods (i=1, i=2, ..., i=N), the maximum amount of heat input to the combustion chamber 3 is specified, and an amount of heat less than or equal to the maximum value is input to the combustion chamber 3. In other words, with the present embodiment, determining the amount of heat input to the combustion chamber 3 through feedback control, and controlling the fuel injection amount or the like such that the determined input heat amount is obtained allows making the flame temperature appropriate.

- Determination of input heat amount -

Next is a description of embodiments regarding a control operation (input heat amount adjustment control) for obtaining the amount of heat $Q(\alpha)$ input to the combustion chamber 3 specified by Expression (12).

(First embodiment)

In the present embodiment, the amount of heat $Q(\alpha)$ input to the combustion chamber 3 is set so as to be less than or equal to the maximum input heat amount by adjusting the amount of fuel injected from the injector 23. The following is a specific description of control of the adjustment of the fuel injection amount.

<Adjustment of fuel injection amount>

As described above, the energy generated when fuel injected into the combustion chamber 3 combusts is roughly divided into kinetic energy for pressing the piston 13 down toward bottom dead center, thermal energy for raising the temperature in the combustion chamber 3, and thermal energy that is dissipated to the outside via the cylinder block 11 and the cylinder head 15. Among these, the combustion temperature (flame temperature) in the combustion chamber 3 is determined by the amount of thermal energy for raising the temperature in the combustion chamber 3. Specifically, the amount of thermal energy for raising the temperature in the combustion chamber 3 corresponds to the amount of heat $Q(\alpha)$ input to the combustion chamber 3, and the amount of NOx produced can be suppressed so as to be less than or equal to a desired value (less than or equal to the NOx target production amount) by setting the input heat amount (amount of energy converted into heat) so as to be less than or equal to the maximum value in accordance with Expression (12) (the maximum value taken by the value of the right-hand side of Expression (12)).

As a specific operation for setting the fuel injection amount, the proportion of the amount of fuel contributing to the temperature rise in the combustion chamber 3 (the fuel amount corresponding to the input heat amount $Q(\alpha)$) to the total amount of fuel injected in the main injection (i.e., out of the amount of fuel injected from the injector 23 into the combustion chamber 3, the amount that is converted into the heat amount in the combustion chamber 3) is obtained in advance, and the total fuel injection amount is obtained by adding the fuel amount contributing to kinetic energy, the fuel amount corresponding to the thermal energy dissipated to the outside, and the like to the fuel amount contributing to the temperature rise.

For example, if 50% of the total amount of fuel injected in the main injection contributes to the temperature rise in the combustion chamber 3, the total fuel injection amount in the main injection can be specified as double the fuel injection amount for raising combustion temperature in the combustion chamber 3 to the maximum temperature (the amount of fuel injected that is converted into the input heat amount), in order to suppress the amount of NOx produced so as to be less than or equal to the desired value.

More specifically, a map or arithmetic expression specifying the relationship between the total fuel injection amount and the input heat amount $Q(\alpha)$ is stored in the ROM 102 in advance, and the total fuel injection amount is obtained such that the input heat amount is caused to be less than or equal to the maximum value.

Also, as described above, if the fuel injection amount necessary for obtaining the required torque is less than or equal to the fuel injection amount specified in the input heat amount adjustment control, that necessary fuel injection amount is used as the actual amount of fuel injected from the injector 23. In this case, the input heat amount can be kept sufficiently low while obtaining the required torque, thus enabling sufficiently suppressing the amount of NOx produced. In contrast, if the fuel injection amount necessary for obtaining the required torque exceeds the maximum fuel injection amount specified in the input heat amount adjustment control (the total fuel injection amount for obtaining the input heat amount, which is obtained on the right-hand side of Expression (12)), the actual amount of fuel injected from the injector 23 is limited to the maximum fuel injection amount. In this case, the amount of NOx produced is suppressed (suppressed to approximately the NOx target production amount) by setting the input heat amount to approximately the maximum value, while limiting the torque of the engine 1.

The maximum value of the input heat amount $Q(\alpha)$ that is actually calculated using Expression (12) is obtained as a value that gradually decreases as each micro-period elapses from when combustion in the combustion chamber 3 starts until the heat generation rates reaches its peak value (during the period S in FIG. 7). One reason for this is that as combustion progresses in the combustion chamber 3, the temperature before start of combustion $Th\alpha$ gradually rises, and the value on the right-hand side in Expression (12) gradually decreases. In other words, as combustion progresses in the combustion chamber 3, the amount of heat that can be input to the combustion chamber 3 gradually decreases, thus requiring the calculation of the maximum value of the input heat amount $Q(\alpha)$ at least during the period S. In the present embodiment as well, the maximum value of the input heat amount $Q(\alpha)$ is calculated and the input heat amount adjustment control is executed only in the period S. Note that the maximum value of the input heat amount $Q(\alpha)$ may be calculated based on Expression (12) over the entirety of the combustion period.

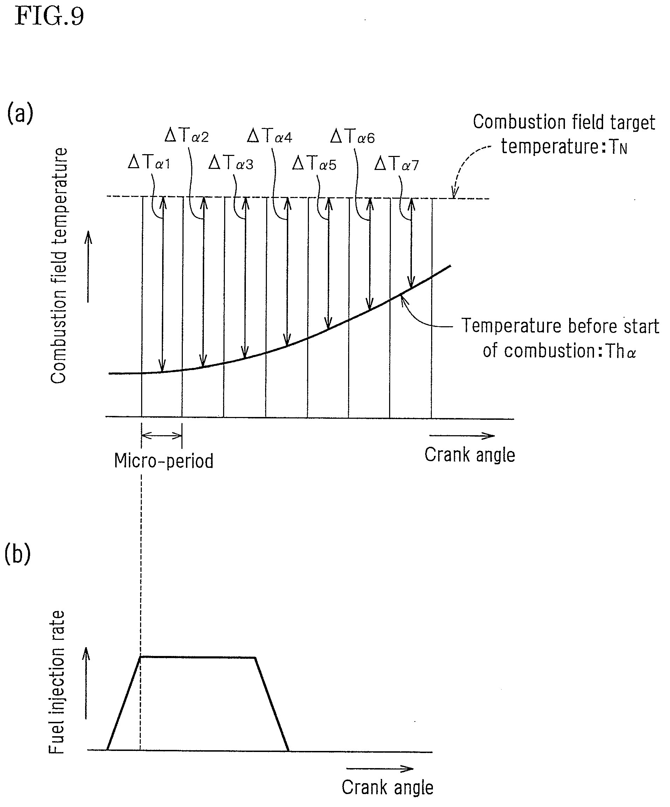

FIG. 9(a) is a diagram showing change in the temperature before start of combustion $Th\alpha$ and in allowable temperature rises $\Delta T\alpha_1$ to $\Delta T\alpha_7$ in the respective micro-periods with respect to the combustion field target temperature $T_N$ in the case where combustion progresses in the combustion chamber 3 (change from when combustion starts in the combustion chamber 3 until the heat generation rate reaches its peak value). The change in the allowable temperature rises $\Delta T\alpha_1$ to $\Delta T\alpha_7$ corresponds to the change in amount of heat $Q(\alpha)$ that can be input to the combustion chamber 3. Note that in order to facilitate understanding with FIG. 9(a), the period from when combustion starts in the combustion chamber 3 until the heat generation rate reaches its peak value is partitioned into seven micro-periods, and change in the respective allowable temperature rises $\Delta T\alpha_1$ to $\Delta T\alpha_7$ are shown.

As shown in FIG. 9(a), as combustion progresses in the combustion chamber 3, the allowable temperature rises $\Delta T\alpha_1$ to $\Delta T\alpha_7$, that is to say, the amounts of heat $Q(\alpha)$ that can be input to the combustion chamber 3, gradually decrease. The injection period of injection from the injector 23 is then specified such that the input heat amount in the micro-periods changes, such that the combustion temperature is caused to be less than or equal to the combustion field target temperature $T_N$ over the entirety of the combustion period, thus causing the amount of NOx produced to be less than or equal to the target production amount. FIG. 9(b) shows an example of change in the rate of fuel injection from the injector 23 for obtaining this change in input heat amount. In this way, stopping fuel injection relatively early in the combustion period reduces the input heat amount $Q(\alpha)$ in the latter half of the combustion period (the vicinity of when the heat generation rate reaches its peak value), thus adjusting the combustion temperature so as to be less than or equal to the combustion field target temperature $T_N$ over the entirety of the combustion period.

<Input heat amount determination timing>

As described above, one specific example of the timing for determining the fuel injection amount for changing the input heat amount $Q(\alpha)$, that is to say, the timing for determining the amount of heat $Q(\alpha)$ input to the combustion chamber 3, is near the point in time when the intake valve 16 closes. This is specifically described below.

As described above, there is no flow of new gas into or out of the cylinder from when the intake valve 16 closes until the subsequent injection of fuel from the injector 23. In other words, the condition of the combustion field is determined when the intake valve 16 closes. For this reason, the parameters in Expression (12) are determined according to the condition in the cylinder when the intake valve 16 closes or immediately before it closes. In other words, the maximum amount of heat to be injected into the combustion chamber 3 in the micro-period at the point in time when combustion starts (the first micro-period, i.e., i=1) can be specified based on Expression (12) at this time. Also, the temperature before start of combustion $Th\alpha$ in the second micro-period (i=2) is specified due to the amount of heat input to the combustion chamber 3 being determined in the first micro-period. For this reason, the maximum amount of heat input to the combustion chamber 3 can be specified for the second micro-period as well based on Expression (12). Obtaining the maximum input heat amount for each of the micro-periods before the fuel injection start timing in this way enables setting a fuel injection form (fuel injection rate waveform) such that at the fuel injection start timing, the combustion temperature in all of the micro-periods is less than or equal to the combustion field target temperature $T_N$. The fuel injection rate waveform set in this way is shown in FIG. 9(b).

As described above, with the present embodiment, a fuel injection form (fuel injection rate waveform) can be set such that the combustion temperature in all of the micro-periods is less than or equal to the combustion field target temperature $T_N$, and the amount of NOx produced in the combustion chamber 3 can be made less than or equal to the target production amount.

Note that in the foregoing description, the input heat amount determination timing is near the point in time when the intake valve 16 closes. In other words, in the above description, the input heat amount for the immediately subsequently performed combustion stroke is obtained, and the fuel injection rate waveform is set in accordance therewith. The present invention is not limited to this, and it is possible for the maximum input heat amount obtained in Expression (12) to be used in the setting of the input heat amount for the cylinder that is to undergo the combustion stroke in the next cycle, or to be used in the setting of the input heat amount for the cylinder that is to undergo the combustion stroke in the cycle after that of the current cylinder (the cylinder that is to undergo the combustion stroke immediately after the calculation of the input heat amount), that is to say, the cylinder that is to undergo the combustion stroke after the crank angle of approximately 720° CA. Also, the input heat amount determination timing, that is to say, the timing at which the maximum input heat amount is specified based on Expression (12), and the amount of heat input to the combustion chamber 3 is determined based thereon, is not limited to being near the point in time when the intake valve 16 closes, and may be during the combustion stroke. In this case, as described above, the determined input heat amount is used in the setting of the fuel injection rate waveform in the cylinder that is to undergo the combustion stroke in the next cycle, or the cycle after that of the current cylinder.

(Second embodiment)

In the following embodiments, only differences from the first embodiment will be described.

In the case where the input heat amount $Q(\alpha)$ is relatively high, the first embodiment described above can be realized without being constrained by the configuration of the injector 23.

However, if the input heat amount $Q(\alpha)$ is relatively low, there are cases where it is only possible to inject an amount of fuel such that the maximum input heat amount is exceeded, due to being constrained by the configuration of the injector 23. One example is the case where it is not possible to inject less than 1.5 mm$^3$ of fuel due to the configuration of the injector 23, and the fuel injection amount obtained according to the maximum input heat amount $Q(\alpha)$ obtained using Expression (12) corresponds to 1.3 mm$^3$. This is due to the fact that the number and diameter of the holes is determined by the configuration of the injector 23, and the minimum injection pressure is determined by the characteristics of the supply pump 21, and therefore a fuel injection rate that is less than or equal to a certain value cannot be realized.

The second embodiment is a countermeasure for such a case. Specific examples of a countermeasure include adjustment of the EGR rate and adjustment of the fuel injection pressure. These are described below.

<Adjustment of EGR rate>

As described above, in the case where it is possible for the input heat amount $Q(\alpha)$ to become excessive due to being constrained by the configuration of the injector 23, (e.g., in the case where fuel injection is performed using the minimum injection amount of the injector 23 (e.g., 1.5 mm$^3$)), if the input heat amount $Q(\alpha)$ exceeds the maximum value, the amount of exhaust gas recirculated to the intake manifold 63 (EGR amount) is raised by the ECU 100 controlling the opening degree of the EGR valve 81. In other words, the oxygen concentration inside the combustion chamber 3 is reduced by raising the EGR rate.

Accordingly, the spatial distance between fuel and oxygen in the combustion chamber 3 increases, and the rate of encounter therebetween decreases, thus reducing the chemical reaction speed. In other words, even if the fuel injection amount is relative high, the amount of heat generated per period decreases, thus preventing the input heat amount $Q(\alpha)$ from becoming excessive.

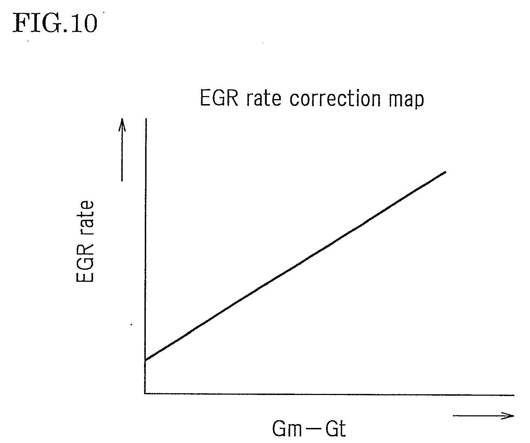

As a specific method for raising the EGR amount, an EGR rate correction map whose parameters are the maximum input heat amount and the input heat amount in the case of performing fuel injection using the minimum fuel injection amount (e.g., 1.5 mm$^3$) of the injector 23 (the case in which it is assumed that the EGR rate is not adjusted) is stored in the ROM 102, the EGR rate at which the actual input heat amount becomes less than or equal to the maximum value is obtained, and the opening degree of the EGR valve 81 is controlled based on the obtained EGR rate. FIG. 10 shows an example of the EGR rate correction map. This EGR rate correction map is referenced if the fuel injection amount specified in the input heat amount adjustment control is less than the <u>minimum</u> injection amount of the injector 23. The EGR rate that is obtained increases with an increase in the difference between the <u>minimum</u> injection amount Gm of the injector 23 and the fuel injection amount Gt specified in the input heat amount adjustment control, and the opening degree of the EGR valve 81 is controlled such that that EGR rate is obtained.

Also, it is possible to store in the ROM 102 an arithmetic expression for calculating the EGR rate from the maximum input heat amount and the amount of heat input when fuel injection is performed using the minimum injection amount of the injector 23.

Accordingly, even in the situation in which, for example, the in-cylinder temperature is relatively high and the amount of heat $Q(\alpha)$ that can be input is low, the combustion temperature is adjusted so as to be less than or equal to the combustion field target temperature $T_N$ over the entirety of the combustion period, thus enabling suppressing the amount of NOx produced so as to be less than or equal to the NOx target production amount.

<First adjustment of fuel injection pressure>

As described above, in the case where it is possible for the input heat amount $Q(\alpha)$ to become excessive due to being constrained by the configuration of the injector 23, the common rail pressure is raised by the ECU 100 controlling the supply pump 21. Accordingly, the fuel injection pressure during the injection of fuel from the injector 23 also rises (injection pressure adjustment control performed by the injection pressure adjustment unit).

The atomization of spray in the combustion chamber 3 is therefore promoted. When the atomization of spray is promoted in this way, there is a reduction in the proportion of the fuel amount to the amount of oxygen per unit space in the combustion chamber 3, there is a reduction in the chemical reaction speed due to a reduction in the rate of encounter between fuel and oxygen similarly to the case of the EGR rate adjustment operation, and therefore the amount of heat generated per period decreases.

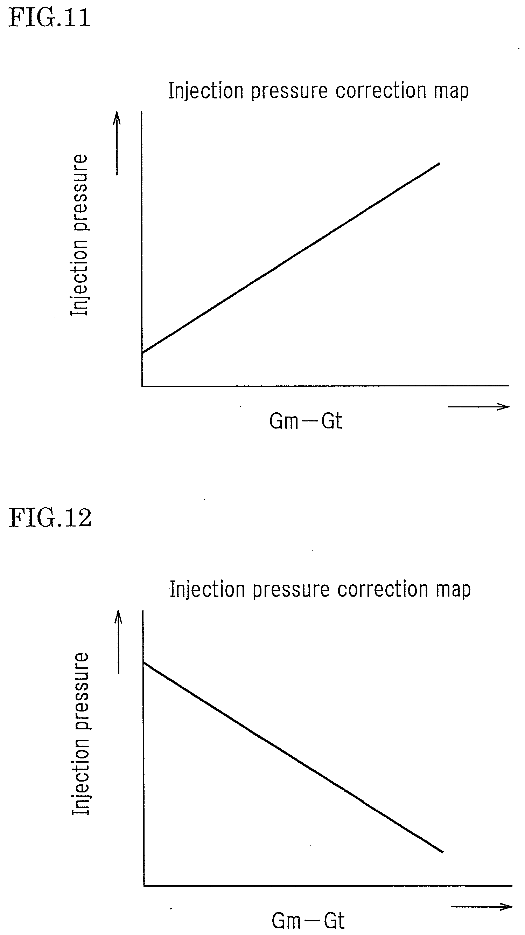

As a specific method for raising the common rail pressure (fuel injection pressure), an injection pressure correction map whose parameters are the maximum input heat amount and the input heat amount in the case of performing fuel injection using the minimum injection amount (e.g., 1.5 mm$^3$) of the injector 23 (the case in which it is assumed that the fuel injection pressure is not changed) is stored in the ROM 102, the injection pressure at which the actual input heat amount becomes less than or equal to the maximum value is obtained, and the supply pump 21 is controlled based on the obtained injection pressure. FIG. 11 shows an example of the injection pressure correction map. This injection pressure correction map is referenced if the fuel injection amount specified in the input heat amount adjustment control is less than the minimum injection amount of the injector 23. The injection pressure that is obtained increases with an increase in the difference between the minimum injection amount Gm of the injector 23 and the fuel injection amount Gt specified in the input heat amount adjustment control, and the supply pump 21 is controlled such that that injection pressure is obtained.

Also, it is possible to store in the ROM 102 an arithmetic expression for calculating the injection pressure from the maximum input heat amount and the amount of heat input when fuel injection is performed using the minimum injection amount of the injector 23.

According to this as well, the combustion temperature is adjusted so as to be less than or equal to the combustion field target temperature $T_N$ over the entirety of the combustion period, thus enabling suppressing the amount of NOx produced so as to be less than or equal to the NOx target production amount.

<Second adjustment of fuel injection pressure>

In place of the first fuel injection pressure adjustment operation, it is also possible to lower the common rail pressure by the ECU 100 controlling the supply pump 21. As the common rail pressure decreases, the fuel injection pressure during the injection of fuel from the injector 23 also decreases (injection pressure adjustment control performed by the injection pressure adjustment unit).

The particles of spray in the combustion chamber 3 therefore increase in size. When the spray particles increase in size in this way, the vaporization period until the combustion condition is reached increases in length, the chemical reaction speed during that period decreases, and thus the amount of heat generated per period decreases.

In this case as well, for example, an injection pressure correction map whose parameters are the maximum input heat amount and the input heat amount in the case of performing fuel injection using the minimum injection amount (e.g., 1.5 mm$^3$) of the injector 23 (the case in which it is assumed that the fuel injection pressure is not changed) is stored in the ROM 102, the injection pressure at which the actual input heat amount becomes less than or equal to the maximum value is obtained, and the supply pump 21 is controlled based on the obtained injection pressure. FIG. 12 shows an example of the injection pressure correction map. This injection pressure correction map is referenced if the fuel injection amount specified in the input heat amount adjustment control is less than the minimum injection amount of the injector 23. The injection pressure that is obtained decreases with an increase in the difference between the minimum injection amount Gm of the injector 23 and the fuel injection amount Gt specified in the input heat amount adjustment control, and the supply pump 21 is controlled such that that injection pressure is obtained.

Also, it is possible to store in the ROM 102 an arithmetic expression for calculating the injection pressure from the maximum input heat amount and the amount of heat input when fuel injection is performed using the minimum injection amount of the injector 23.

According to this as well, the combustion temperature is adjusted so as to be less than or equal to the combustion field target temperature $T_N$ over the entirety of the combustion period, thus enabling suppressing the amount of NOx produced so as to be less than or equal to the NOx target production amount.

Note that in the present embodiment, in the case where it is only possible to inject an amount of fuel such that the maximum input heat amount is exceeded, due to being constrained by the configuration of the injector 23, the EGR rate or the fuel injection pressure is adjusted. The present invention is not limited to this, and is applicable also in the situation where there is no constraint by the configuration of the injector 23, that is to say, the case where the fuel injection amount obtained based on the maximum input heat amount $Q(\alpha)$ exceeds the minimum injection amount of the injector 23.

(Third embodiment)

As described above, due to combustion occurring in a continuous manner in the combustion field, after combustion occurred at a certain time $\alpha$, the space in which combustion starts at the time $\alpha+\Delta\alpha$ is influenced by the temperature of the combustion gas that underwent combustion at the time $\alpha$, and the temperature before the start of combustion at the time $\alpha+\Delta\alpha$ rises over the temperature before start of combustion Th$\alpha$ at the time $\alpha$. In other words, if the maximum input heat amount is calculated at the time $\alpha+\Delta\alpha$ without giving consideration to this amount of rise in the temperature before start of combustion Th$\alpha$, it is possible for the maximum input heat amount to be such that the combustion temperature exceeds the combustion field target temperature $T_N$.

In consideration of this, in the present embodiment, the temperature before start of combustion is updated using Expression (13) below.

[Exp 13]

$$T_{i+1} = T_i + \beta \cdot \left(T_N - T_i\right) \cdots (13)$$

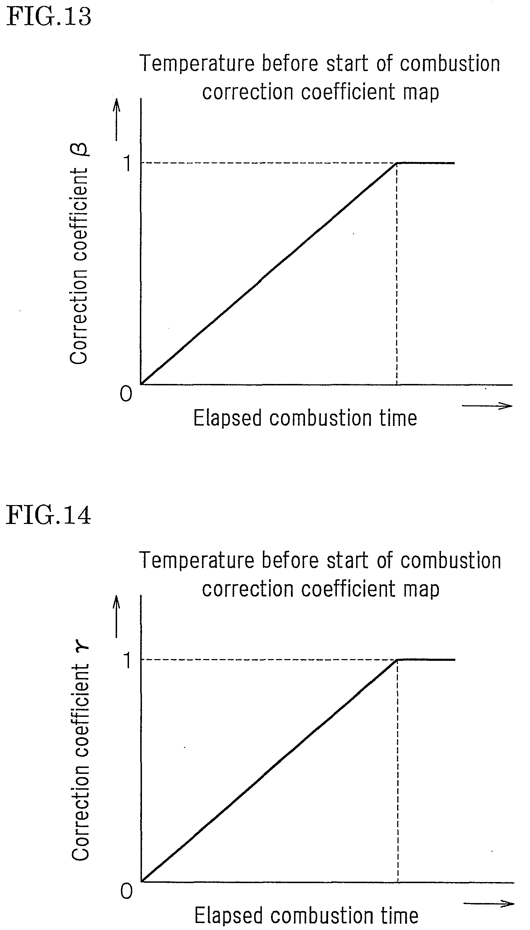

Here, Ti is the previous temperature before start of combustion in the micro-period, $T_{i+1}$ is the current temperature before start of combustion in the micro-period, and β is the temperature before start of combustion correction coefficient. This temperature before start of combustion correction coefficient β is obtained from a temperature before start of combustion correction coefficient map stored in the ROM 102 in advance. FIG. 13 shows an example of the temperature before start of combustion correction coefficient map. As shown in FIG. 13, according to the temperature before start of combustion correction coefficient map, the temperature before start of combustion correction coefficient β that is obtained gradually increases as time elapses after the start of combustion. Note that the temperature before start of combustion correction coefficient β is set to "0" as the initial value, and is set so as to gradually increase as time elapses after the start of combustion, with the maximum value being "1". In other words, the temperature before start of combustion is updated to a higher value as time elapses.

Updating the temperature before start of combustion Thα while applying the updated temperature before start of combustion Thα to Expression (12) enables highly precisely obtaining the maximum input heat amount Q(α) in each micro-period. As a result, the combustion temperature in the combustion chamber 3 is reliably prevented from exceeding the combustion field target temperature $T_N$, thus enabling suppressing the amount of NOx produced so as to be less than or equal to the NOx target production amount.

(Fourth embodiment)

Also, when fuel injection is performed in the combustion chamber 3, there are cases where the combustion field is cooled through latent heat of the fuel. In such a case, the temperature before start of combustion Thα decreases due to the influence of such latent heat. Also in the case where the fuel temperature is lower than the temperature in the combustion chamber before the fuel is injected, and that difference in temperature is high, the temperature before start of combustion Thα decreases due to the influence of the fuel. In other words, if the maximum input heat amount is calculated without giving consideration to the amount of decrease in the temperature before start of combustion Thα, it is possible for the maximum value that is calculated to be lower than the maximum value that should originally be calculated.

In consideration of this, in the present embodiment, the temperature before start of combustion is updated using Expression (14) below.

[Exp 14]

$$T_{i+1} = T_i - \gamma \cdot \left(T_N - T_i\right) \quad \cdots \quad (14)$$

Here, Ti is the previous temperature before start of combustion in the micro-period, $T_{i+1}$ is the current temperature before start of combustion in the micro-period, and γ is the temperature before start of combustion correction coefficient. This temperature before start of combustion correction coefficient γ is obtained from a temperature before start of combustion correction coefficient map stored in the ROM 102 in advance. FIG. 14 shows an example of the temperature before start of combustion correction coefficient map. As shown in FIG. 14, according to the temperature before start of combustion correction coefficient map, the temperature before start of combustion correction coefficient γ that is obtained gradually increases as time elapses after the start of combustion. Note that the temperature before start of combustion correction coefficient γ is set to "0" as the initial value, and is set so as to gradually increase as time elapses after the start of combustion, with the maximum value being "1". In other words, the temperature before start of combustion is updated to a lower value as time elapses.

Updating the temperature before start of combustion Thα while applying the updated temperature before start of combustion Thα to Expression (12) enables highly precisely obtaining the maximum input heat amount Q(α) in each micro-period. As a result, a higher input heat amount can be obtained even while suppressing the amount of NOx produced so as to be less than or equal to the NOx target production amount, thus enabling improving the thermal efficiency.

Note that in the above description, the temperature before start of combustion correction coefficient γ that is obtained gradually increases as time elapses after the start of combustion. The present invention is not limited to this, and the temperature before start of combustion correction coefficient γ may be changed in accordance with the fuel injection pressure. For example, the temperature before start of combustion correction coefficient γ that is obtained may increase as the fuel injection pressure increases.

(Fifth embodiment)

Also, if the temperature before start of combustion Thα obtained in the above embodiments already exceeds the combustion field target temperature $T_N$, it is no longer possible to input an amount of heat to the combustion field targeted by Expression (12). In other words, if an amount of heat is input to the combustion field, there is the possibility of a large amount of NOx being produced.

In consideration of this, in the present embodiment, an amount of heat is input to a combustion field different from the combustion field targeted by Expression (12) (the fuel spray is moved by the spray moving unit) by adjusting the fuel injection pressure, swirl, fuel injection interval, or fuel injection period, thus causing combustion to be performed in the newly set combustion field, and preventing the combustion temperature from exceeding the combustion field target temperature $T_N$. This is specifically described below.

<Adjustment of fuel injection pressure>

As described above, if the temperature before start of combustion Th$\alpha$ already exceeds the combustion field target temperature $T_N$, the common rail pressure is either raised or lowered. Accordingly, the fuel injection pressure during the injection of fuel from the injector 23 also increases or decreases.

Accordingly, when fuel is injected from the injector 23, the flight distance of the fuel spray changes. Specifically, the spray flight distance increases if the common rail pressure is increased, and conversely the spray flight distance decreases if the common rail pressure is reduced. Accordingly, an amount of heat is input to a combustion field different from this combustion field (the combustion field targeted by Expression (12)), and thus combustion is performed in the newly set combustion field. For this reason, the combustion temperature in this combustion field does not exceed the combustion field target temperature $T_N$, thus enabling suppressing the amount of NOx produced so as to be less than or equal to the NOx target production amount.

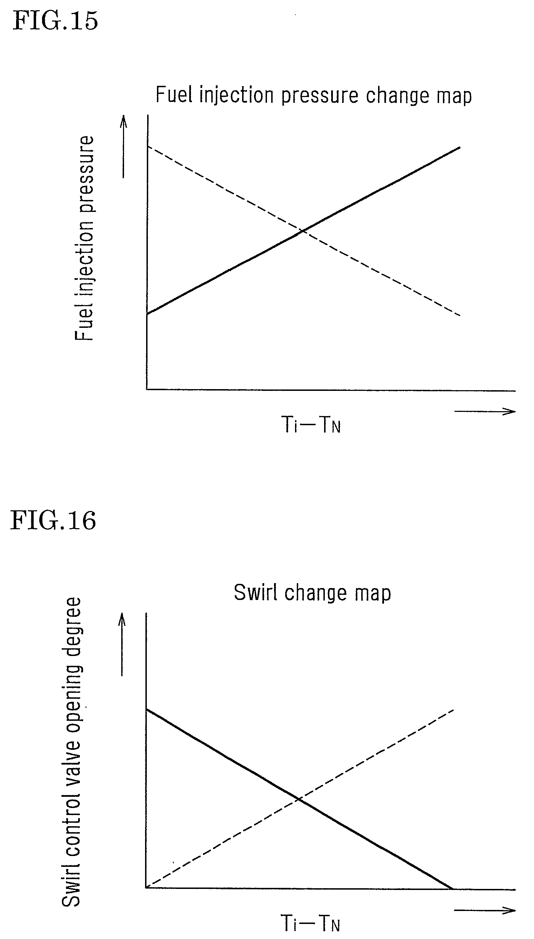

When adjusting the fuel injection pressure in this way, it is possible to switch the fuel injection pressure depending on whether the temperature before start of combustion Th$\alpha$ exceeds the combustion field target temperature $T_N$, or it is possible to change the fuel injection pressure in accordance with the difference between the temperature before start of combustion Th$\alpha$ and the combustion field target temperature $T_N$. FIG. 15 shows a fuel injection pressure change map applied in the case of changing the fuel injection pressure in accordance with the difference between these temperatures. In FIG. 15, the solid line shows the case where the fuel injection pressure is increased as the temperature difference increases, and the broken line shows the case where the fuel injection pressure is reduced as the temperature difference increases.

<Swirl adjustment>

As described above, if the temperature before start of combustion Th$\alpha$ already exceeds the combustion field target temperature TN, the opening degree of the swirl control valve 66 is changed. For example, reducing the opening degree of the swirl control valve 66 causes a change from a low swirl condition to a high swirl condition, and increasing the opening degree of the swirl control valve 66 causes a change from a high swirl condition to a low swirl condition.

Accordingly, when fuel is injected from the injector 23, the fuel spray is influenced by the swirl current, and the position of the fuel spray in the circumferential direction in the combustion chamber 3 changes (the rate of flow in the circumferential direction changes). Specifically, in the case of a change to the high swirl condition, a new combustion field is formed on the downstream side in the swirl flow direction relative to the combustion field targeted by Expression (12). Conversely, in the case of a change to the low swirl condition, a new combustion field is formed on the upstream side in the swirl flow direction relative to the combustion field targeted by Expression (12). Accordingly, an amount of heat is input to a combustion field different from this combustion field (the combustion field targeted by Expression (12)), and thus combustion is performed in the newly set combustion field. For this reason, the combustion temperature in this combustion field does not exceed the combustion field target temperature $T_N$, thus enabling suppressing the amount of NOx produced so as to be less than or equal to the NOx target production amount.

When adjusting the swirl in this way, it is possible to switch the opening degree of the swirl control valve 66 depending on whether the temperature before start of combustion Th$\alpha$ exceeds the combustion field target temperature $T_N$, or it is possible to change the opening degree of the swirl control valve 66 in accordance with the difference between the temperature before start of combustion Th$\alpha$ and the combustion field target temperature $T_N$. FIG. 16 shows a swirl change map applied in the case of changing the opening degree of the swirl control valve 66 in accordance with the difference between these temperatures. In FIG. 16, the solid line shows the case where the opening degree of the swirl control valve 66 is reduced as the temperature difference increases, thus changing to the high swirl condition, and the broken line shows the case where the opening degree of the swirl control valve 66 is increased as the temperature difference increases, thus changing to the low swirl condition.

<Fuel injection interval and fuel injection period>

Also, a new combustion field different from the combustion field targeted by Expression (12) can be likewise formed also by changing the fuel injection interval or fuel injection period when fuel is injected from the injector 23.

For example, changing the fuel injection interval without a change in the swirl causes a change in the position of the combustion field in the circumferential direction in the combustion chamber 3. Also, if the fuel injection period is changed to the angle of delay side (e.g., if fuel is injected on the angle of delay side of compression top dead center (TDC), fuel is injected while the piston 13 is moving toward bottom dead center, that is to say, while the volume of the combustion chamber 3 is expanding, and thus the combustion temperature is kept low. For example, combustion starts while the spray of injected fuel diffuses in a region away from the cavity 13b, and in this case as well, a new combustion field different from the combustion field targeted by Expression (12) is formed. Accordingly, an amount of heat is input to a combustion field different from this combustion field (the combustion field targeted by Expression (12)), and thus combustion is performed in the newly set combustion field. For this reason, the combustion temperature in this combustion field does not exceed the combustion field target temperature $T_N$, thus enabling suppressing the amount of NOx produced so as to be less than or equal to the NOx target production amount. Also, performing combustion in a new combustion field eliminates the need to reduce the amount of heat input to the cylinder, thus enabling keeping the combustion efficiency high.

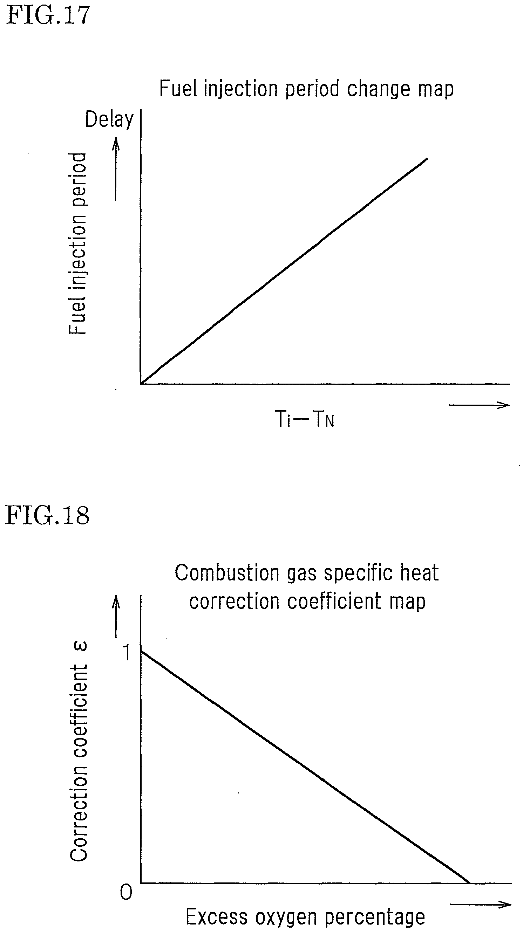

When adjusting the fuel injection interval or the fuel injection period in this way, it is possible to switch the fuel injection interval or the fuel injection period depending on whether the temperature before start of combustion $Th\alpha$ exceeds the combustion field target temperature $T_N$, or it is possible to change the fuel injection interval or the fuel injection period in accordance with the difference between the temperature before start of combustion $Th\alpha$ and the combustion field target temperature $T_N$. FIG. 17 shows a fuel injection period change map applied in the case of moving the fuel injection period to the angle of delay side in accordance with the difference between these temperatures.

In Embodiment 5, if the temperature before start of combustion $Th\alpha$ exceeds the combustion field target temperature $T_N$ at the timing of calculation of the maximum input heat amount in each micro-period (e.g., near the point in time when the intake valve 16 closes), the fuel injection pressure, swirl, fuel injection interval, or fuel injection period is adjusted in the combustion stroke to be executed immediately subsequently.

(Sixth embodiment)

After combustion occurred at a certain time $\alpha$, in the space in which combustion starts at the time $\alpha+D\alpha$, there are cases where there is a difference between the gas composition at the time $\alpha$ and the gas composition at the time $\alpha+\Delta\alpha$. In such a case, generally the combustion gas specific heat $\sigma$ increases. In other words, if the maximum input heat amount is calculated without giving consideration to this change in the combustion gas specific heat $\sigma$, it is possible for the maximum input heat amount to be estimated so as to be excessively high, and for the combustion temperature to exceed the combustion field target temperature $T_N$.

In consideration of this, in the present embodiment, the combustion gas specific heat $\sigma$ is updated using Expression (15) below.

[Exp 15]

$$\sigma(\alpha)_{i+1} = \sigma(\alpha)_i + \varepsilon \cdot (\sigma - \sigma(\alpha)_i) \quad \cdots (15)$$

Here, $\sigma(\alpha)_i$ is the previous combustion gas specific heat in the micro-period, $\sigma(\alpha)_{i+1}$ is the current combustion gas specific heat in the micro-period, and $\varepsilon$ is the combustion gas specific heat correction coefficient. This combustion gas specific heat correction coefficient $\varepsilon$ is obtained from a combustion gas specific heat correction coefficient map stored in the ROM 102 in advance. FIG. 18 shows an example of the combustion gas specific heat correction coefficient map. As shown in FIG. 18, according to this combustion gas specific heat correction coefficient map, in accordance with the local excess oxygen percentage in the combustion field, the combustion gas specific heat correction coefficient $\varepsilon$ that is obtained gradually increases as the excess oxygen percentage decreases. Note that the combustion gas specific heat correction coefficient $\varepsilon$ is obtained as a value in the range of "0 to 1".

Updating the combustion gas specific heat correction coefficient $\varepsilon$ while applying the updated combustion gas specific heat $\sigma$ to Expression (12) enables highly precisely obtaining the maximum input heat amount $Q(\alpha)$ in each micro-period. As a result, the combustion temperature in the combustion chamber 3 is reliably prevented from exceeding the combustion field target temperature $T_N$, thus enabling suppressing the amount of NOx produced so as to be less than or equal to the NOx target production amount.

(Seventh embodiment)

In the embodiments described above, the maximum heat input amount is calculated through Expression (12) with use of parameters obtained by calculation or from a map, and the amount of heat input to the combustion chamber 3 is adjusted.

In the present embodiment, in place of this, an input heat amount setting map for automatically setting the input heat amount in accordance with the combustion field target temperature $T_N$ is stored in the ROM 102, and the operations of the embodiments described above (e.g., the setting of the fuel injection amount and the setting of the EGR amount) are performed in accordance with the input heat amount read out from the input heat amount setting map. Note that this input heat amount setting map is created in advance through experimentation, simulation, or the like.

More specifically, as described above, in the engine 1, the air-fuel mixture density p, the combustion gas specific heat $\sigma$, and the temperature before start of combustion $Th\alpha$ are substantially determined before fuel injection, and do not change very much. The combustion field volume $V_c(\alpha)$ is also substantially determined by the gas flow and the fuel injection pattern. For this reason, while the various states are stable (the majority of the combustion period), it can be thought that there is no need to calculate the input heat amount for each micro-period. In view of this, the input heat amount setting map in which the combustion field target temperature $T_N$ and the input heat amount $Q(\alpha)$ are correlated is created, and the operations of the embodiments described above are performed in accordance with the input heat amount $Q(\alpha)$ read out from the input heat amount setting map.

This enables setting the input heat amount $Q(\alpha)$ without acquiring the above-described parameters or performing the above-described calculation, and a stable combustion temperature condition can be obtained.

(Eighth embodiment)

A description is given in the above embodiments of the case where a piezo injector in which the fuel injection rate is changed by achieving full valve opening only when power is being conducted is applied to the engine 1.

In the present embodiment, the case of applying a variable injection rate injector is described.

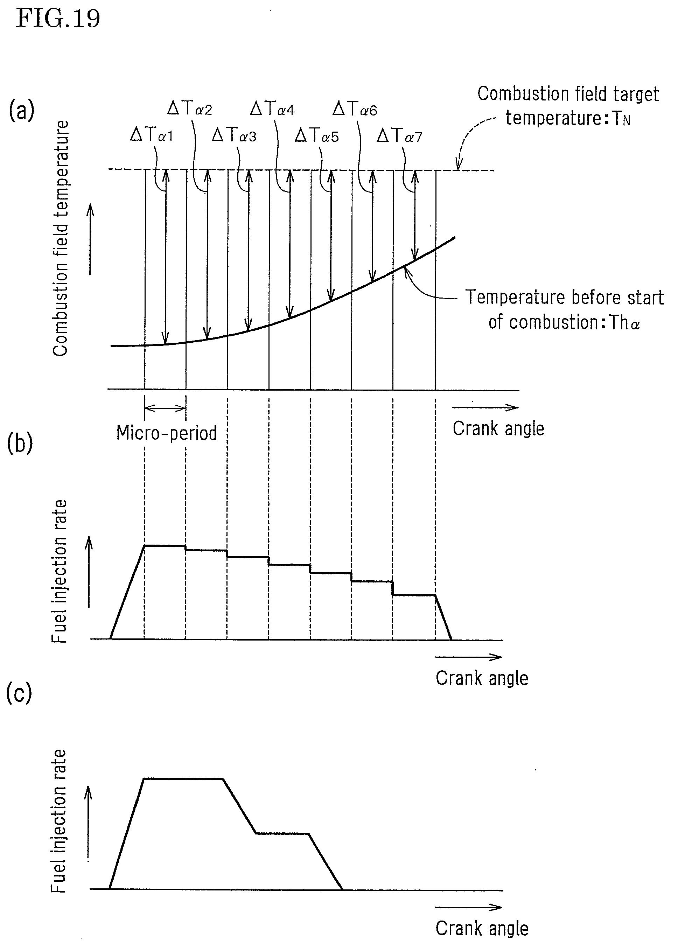

FIG. 19(a) is a diagram showing change in the temperature before start of combustion $Th\alpha$ and in allowable temperature rises $\Delta T\alpha_1$ to $\Delta T\alpha_7$ in the respective micro-periods with respect to the combustion field target temperature $T_N$ in the case where combustion progresses in the combustion chamber 3, which corresponds to FIG. 9(a). The change in the allowable temperature rises $\Delta T\alpha_1$ to $\Delta T\alpha_7$ corresponds to the change in amount of heat $Q(\alpha)$ that can be input to the combustion chamber 3.

Similarly to the case of FIG. 9 described above, as combustion progresses in the combustion chamber 3, the allowable temperature rises $\Delta T\alpha_1$ to $\Delta T\alpha_7$, that is to say, the amounts of heat $Q(\alpha)$ that can be input to the combustion chamber 3, gradually decrease. The variable injection rate injector is then controlled such that the input heat amount in the micro-periods changes, such that the combustion temperature is caused to be less than or equal to the combustion field target temperature $T_N$ over the entirety of the combustion period, thus causing the amount of NOx produced to be less than or equal to the target production amount.

FIGS. 19(b) and 19(c) each show an example of change in the rate of fuel injection from the variable injection rate injector for obtaining this change in input heat amount. In this way, with the variable injection rate injector, it is possible to set a fuel injection rate according to the input heat amount in each micro-period, thus enabling more precisely setting the fuel injection form such that the combustion temperature is caused to be less than or equal to the combustion field target temperature $T_N$ in all of the micro-periods, thereby making it possible to cause the amount of NOx produced in the combustion chamber 3 to be less than or equal to the target production amount.

Note that the fuel injection rate waveform of the variable injection rate injector shown in FIG. 19(b) is that in the case of individually setting the fuel injection rate in each micro-period in accordance with the allowable temperature rises $\Delta T\alpha_1$ to $\Delta T\alpha_7$ respectively obtained in the micro-periods. In contrast, the fuel injection rate waveform of the variable injection rate injector shown in FIG. 19(c) is that in the case of setting a high fuel injection rate for the former half of the injection period and setting a low fuel injection rate for the latter half, thus adjusting the combustion temperature so as to be less than or equal to the combustion field target temperature $T_N$ over the entirety of the combustion period.

Also, the timing according to which the operation for obtaining the input heat amount is executed in the second to eighth embodiments described above may be near the timing when the intake valve 16 closes, or during the combustion stroke, similarly to the case of the first embodiment described above. In particular, in the case of adjusting the EGR rate, if the input heat amount in the combustion stroke to be executed immediately subsequently is to be adjusted using the EGR rate, it is necessary to obtain the input heat amount and determine the EGR rate before the intake valve 16 closes, and the EGR rate in the combustion chamber 3 at the point in time when the intake valve 16 closes needs to be adjusted to a value according to which that input heat amount is obtained.

Also, the first to eighth embodiments described above may be individually applied to the engine 1 (i.e., it is possible for only one embodiment to be applied), or a combination thereof may be applied to the control of the engine 1.

- Other embodiments -

In the above-described embodiments, a description is given taking the example where the present invention is applied to an in-line four-cylinder diesel engine mounted in an automobile. The present invention is not limited to use in an automobile, and is applicable also to engines used in other applications. Also, there is no particular limitation with respect to the number of cylinders or the engine type (classified as an in-line engine, V-type engine, horizontal opposed engine, and so forth).

Also, in the embodiments described above, the maniverter 77 is provided with the NSR catalyst 75 and the DPNR catalyst 76, but a maniverter provided with the NSR catalyst 75 and a DPF (Diesel Particulate Filter) may be used as well.

Note that in the embodiments described above, the EGR apparatus has a configuration in which exhaust gas in the exhaust manifold 72 is recirculated to the intake system 6. The present invention is not limited to this, and it is possible to employ an LPL (Low Pressure Loop) EGR apparatus that recirculates exhaust gas on the downstream side of the turbine wheel 52 in the turbocharger 5 to the intake system 6.

Note that as described above, it is possible for the embodiments to be applied to also a diesel engine that executes auxiliary injection or divided main injection. In this case, it is preferable that the present invention is applied to each auxiliary injection (pilot injection, pre-injection, after-injection, and post-injection), and that the amount of heat input to the combustion chamber 3 is caused to be less than or equal to the maximum input heat amount not only in the main injection, but also in all of the auxiliary injections. Also, in the case of executing divided main injection, it is preferable that the present invention is applied to each individual divided main injection, and that the amount of heat input to the combustion chamber 3 is caused to be less than or equal to the maximum input heat amount in each of the divided main injections.

Industrial Applicability

The present invention is applicable to control for reducing the NOx discharge amount in a common rail in-cylinder direct injection multi-cylinder diesel engine mounted in an automobile.

Reference Signs List

| | |
|---|---|
| 1 | engine (internal combustion engine) |
| 3 | combustion chamber |
| 23 | injector (fuel injection valve) |
| $V_c(\alpha)$ | combustion field volume |
| $Th\alpha$ | temperature before start of combustion in combustion field |
| $T_N$ | combustion field target temperature |
| $\rho$ | gas density |
| $\sigma$ | gas specific heat |

**Claims**

1. A control apparatus of a compression self-ignition internal combustion engine (1) in which fuel injected from a fuel injection valve (23) is caused to combust by self-ignition in a combustion chamber (3), the control apparatus comprising:

an input heat amount specification unit that, using the volume ($V_c(\alpha)$) of a combustion field which is a space inside the combustion chamber (3) in which an air-fuel mixture exists and being combusted, the temperature ($Th_\alpha$) before the start of combustion in the combustion field, a combustion field target temperature ($T_N$) for limiting the amount of NOx produced during combustion in the combustion field to a predetermined target NOx production amount, the density of gas ($\rho$) existing in the combustion field, and the specific heat ($\sigma$) of gas existing in the combustion field as parameters, specifies an amount of heat input to the combustion chamber (3) according to which the flame temperature during combustion in the combustion field becomes the combustion field target temperature ($T_N$); and
an input heat amount adjustment unit that adjusts an amount of heat ($Q(\alpha)$) input to the combustion chamber (3) using the input heat amount specified by the input heat amount specification unit as a maximum value of the input heat amount,
wherein the input heat amount specification unit is configured so as to partition a period of combustion in the combustion chamber (3) into a plurality of micro-periods, and specify the amount of heat input to the combustion chamber (3) according to which the flame temperature of the combustion field becomes the combustion field target temperature ($T_N$) in each of the micro-periods,
wherein the amount of heat $Q(\alpha)$ input to the combustion chamber (3) is set so as to be less than or equal to the maximum value of the input heat amount according to the inequality:

$$Q(\alpha) \leq \rho(\alpha)\sigma(\alpha)V_C(\alpha)(T_N - Th_\alpha)$$

where $\alpha$ is a representative value of a crank angle in a micro-period, $V_c(\alpha)$ is the volume of the combustion field being a space occupied by a spray of fuel injected in the micro-period, $Th_\alpha$ is the temperature of the air-fuel mixture existing in the combustion field at the time when fuel injection was performed in the micro-period, $\rho(\alpha)$ is the density of the gas in the combustion field in the micro-period, $\sigma(\alpha)$ is the specific heat of the gas in the combustion field in the micro-period, $T_N$ is a target combustion temperature in the combustion field in the micro-period, and $Q(\alpha)$ is the input heat amount to the combustion chamber (3) in the micro-period.

2. The control apparatus of an internal combustion engine (1) according to claim 1,
wherein the input heat amount specification unit is configured so as to specify the amount of heat input to the combustion chamber (3) according to which the flame temperature during combustion in the combustion field becomes the combustion field target temperature ($T_N$) only in, within the period of combustion in the combustion chamber (3), a period (S) up to when a heat generation rate substantially reaches a peak value.

3. The control apparatus of an internal combustion engine (1) according to claim 1,
wherein the input heat amount adjustment unit is configured so as to be aware in advance of, an amount that is converted into a heat amount in the combustion chamber (3) of an injection amount of fuel injected from the fuel injection valve (23) to the combustion chamber (3), and set an amount of fuel injected from the fuel injection valve (23) such that an amount of heat input to the combustion chamber (3) corresponding to the converted heat amount is less than or equal to the maximum value of the input heat amount.

4. The control apparatus of an internal combustion engine (1) according to claim 1, comprising:

   an exhaust gas recirculation apparatus (8, 81, 82) that recirculates a part of exhaust gas discharged from an exhaust system (7) to an intake system (6),
   wherein the input heat amount adjustment unit is configured so as to adjust the amount of heat input to the combustion chamber (3) by setting an amount of exhaust gas recirculated by the exhaust gas recirculation apparatus (8, 81, 82) such that the flame temperature of the combustion field becomes the combustion field target temperature ($T_N$).

5. The control apparatus of an internal combustion engine (1) according to claim 1, comprising:

   an injection pressure adjustment unit that adjusts an injection pressure of fuel injected from the fuel injection valve (23),
   wherein the input heat amount adjustment unit is configured so as to, with use of the injection pressure adjustment unit, set the injection pressure such that the flame temperature of the combustion field becomes the combustion field target temperature ($T_N$).

6. The control apparatus of an internal combustion engine (1) according to claim 1,
wherein the input heat amount specification unit is configured so as to, giving consideration to a degree of influence that the amount of heat generated in the combustion field in a previous micro-period exerts on the temperature ($Th_\alpha$) before the start of combustion in the combustion field in the current micro-period, specify the amount of heat input to the combustion chamber (3) according to which the flame temperature during combustion in the combustion field in the current micro-period becomes the combustion field target temperature ($T_N$), by correcting the temperature ($Th_\alpha$) before the start of combustion in the current micro-period.

7. The control apparatus of an internal combustion engine (1) according to claim 1,

wherein the input heat amount specification unit is configured so as to, giving consideration to an amount of decrease in the flame temperature of the combustion field due to fuel injected into the combustion chamber (3), obtain the temperature ($Th_\alpha$) before the start of combustion in the current micro-period by correcting the temperature before the start of combustion in a previous micro-period, and specify the amount of heat input to the combustion chamber (3) according to which the flame temperature during combustion in the combustion field in the current micro-period becomes the combustion field target temperature ($T_N$).

8. The control apparatus of an internal combustion engine (1) according to claim 1, comprising:

a spray moving unit that, in a case where the temperature ($Th_\alpha$) before the start of combustion in the combustion field is greater than or equal to the combustion field target temperature ($T_N$), moves a spray of fuel such that a new combustion field is formed in an area different from that of the combustion field in which the heat amount specified by the input heat amount specification unit is to be input.

9. The control apparatus of an internal combustion engine (1) according to claim 8,
wherein the spray moving unit is configured so as to execute at least one of changing the injection pressure of fuel injected from the fuel injection valve (23), changing swirling in the combustion chamber (3), changing a fuel injection interval, and changing a fuel injection period.

10. The control apparatus of an internal combustion engine (1) according to claim 1,
wherein the input heat amount specification unit is configured so as to obtain the specific heat of gas existing in the combustion field in the current micro-period by correcting the specific heat of gas existing in the combustion field in a previous micro-period, and specify the amount of heat input to the combustion chamber (3) according to which the flame temperature during combustion in the combustion field in the current micro-period becomes the combustion field target temperature ($T_N$).

11. The control apparatus of an internal combustion engine (1) according to claim 1,
wherein the input heat amount specification unit is configured so as to read out an input heat amount from an input heat amount specification map that enables specification of an amount of heat input to the combustion chamber (3) in accordance with the combustion field target temperature ($T_N$).


**Patentansprüche**

1. Steuerungsgerät einer Brennkraftmaschine mit Kompressionsselbstentzündung (1), in der bewirkt wird, dass Kraftstoff, der von einem Kraftstoffeinspritzventil (23) eingespritzt wird, durch eine Selbstentzündung in einer Brennkammer (3) verbrennt, wobei das Steuerungsgerät Folgendes aufweist:

eine Eingangswärmemengenspezifikationseinheit, die mittels des Volumens ($V_c(\alpha)$) eines Verbrennungsfelds, das ein Raum innerhalb der Brennkammer (3) ist, in der ein Luft-Kraftstoff-Gemisch vorliegt und verbrannt wird, der Temperatur ($Th_\alpha$) vor dem Start der Verbrennung in dem Verbrennungsfeld, einer Verbrennungsfeldsolltemperatur ($T_N$) zum Begrenzen der Menge an NOx, die während der Verbrennung in dem Verbrennungsfeld erzeugt wird, auf eine vorbestimmte NOx-Sollerzeugungsmenge, der Dichte des Gases (p), das in dem Verbrennungsfeld vorliegt, und der spezifischen Wärme ($\sigma$) des Gases, das in dem Verbrennungsfeld vorliegt, als Parameter eine Wärmemenge spezifiziert, die in die Brennkammer (3) eingeht, gemäß der die Flammentemperatur während der Verbrennung in dem Verbrennungsfeld die Verbrennungsfeldsolltemperatur ($T_N$) wird; und eine Eingangswärmemengeneinstelleinheit, die eine Wärmemenge ($Q(\alpha)$), die in die Brennkammer (3) eingeht, mittels der Eingangswärmemenge einstellt, die durch die Eingangswärmemengenspezifikationseinheit als ein maximaler Wert der Eingangswärmemenge spezifiziert ist,
wobei die Eingangswärmemengenspezifikationseinheit gestaltet ist, um einen Zeitraum der Verbrennung in der Brennkammer (3) in eine Vielzahl von Mikrozeiträumen zu unterteilen, und um die Wärmemenge, die in die Brennkammer (3) eingeht, gemäß der die Flammentemperatur des Verbrennungsfelds die Verbrennungsfeldsolltemperatur ($T_N$) wird, in jedem der Mikrozeiträume zu spezifizieren,
wobei die Wärmemenge $Q(\alpha)$, die in die Brennkammer (3) eingeht, festgelegt wird, um kleiner zu sein als oder gleich zu sein wie der maximale Wert der Eingangswärmemenge gemäß der Ungleichung:

$$Q(\alpha) \leq \rho(\alpha)\ \sigma(\alpha)V_C(\alpha)(T_N - Th_\alpha)$$

wobei $\alpha$ ein repräsentativer Wert eines Kurbelwinkels in einem Mikrozeitraum ist, $V_c(\alpha)$ das Volumen des Verbrennungsfelds ist, das ein Raum ist, der durch einen Kraftstoffsprühnebel besetzt ist, der in dem Mikrozeitraum eingespritzt wird, $Th_\alpha$ die Temperatur des Luft-Kraftstoff-Gemischs ist, das in dem Verbrennungsfeld zu der Zeit vorliegt, wann eine Kraftstoffeinspritzung in dem Mikrozeitraum ausgeführt worden ist, $\rho(\alpha)$ die Dichte des Gases in dem Verbrennungsfeld in dem Mikrozeitraum ist, $\sigma(\alpha)$ die spezifische Wärme des Gases in dem Verbrennungsfeld in dem Mikrozeitraum ist, $T_N$ eine Sollverbrennungstemperatur in dem Verbrennungsfeld in dem Mikrozeitraum ist, und $Q(\alpha)$ die Eingangswärmemenge in die Brennkammer (3) in dem Mikrozeitraum ist.

2. Steuerungsgerät einer Brennkraftmaschine (1) nach Anspruch 1,
wobei die Eingangswärmemengenspezifikationseinheit gestaltet ist, um die Wärmemenge, die in die Brennkammer (3) eingeht, gemäß der die Flammentemperatur während der Verbrennung in dem Verbrennungsfeld die Verbrennungsfeldsolltemperatur ($T_N$) wird, innerhalb des Zeitraums der Verbrennung in der Brennkammer (3) nur in einem Zeitraum (S) bis zu einem Zeitpunkt zu spezifizieren, wann eine Wärmeerzeugungsrate im Wesentlichen einen Spitzenwert erreicht.

3. Steuerungsgerät einer Brennkraftmaschine (1) nach Anspruch 1,
wobei die Eingangswärmemengeneinstelleinheit gestaltet ist, um im Voraus eine Menge zu erkennen, die in eine Wärmemenge in der Brennkammer (3) einer Einspritzmenge an Kraftstoff, die von dem Kraftstoffeinspritzventil (23) in die Brennkammer (3) eingespritzt wird, umgewandelt wird, und um eine Menge an Kraftstoff, die von dem Kraftstoffeinspritzventil (23) eingespritzt wird, derart festzulegen, dass eine Wärmemenge, die in die Brennkammer (3) korrespondierend zu der umgewandelten Wärmemenge eingeht, kleiner ist als oder gleich ist wie der maximale Wert der Eingangswärmemenge.

4. Steuerungsgerät einer Brennkraftmaschine (1) nach Anspruch 1, die Folgendes aufweist:

ein Abgasrückführungsgerät (8, 81, 82), das einen Teil des Abgases, das von einem Abgassystem (7) ausgestoßen wird, zu einem Einlasssystem (6) rückführt,
wobei die Eingangswärmemengeneinstelleinheit gestaltet ist, um die Wärmemenge, die in die Brennkammer (3) eingeht, durch Festlegen einer Menge an Abgas, die durch das Abgasrückführungsgerät (8, 81, 82) rückgeführt wird, derart einzustellen, dass die Flammentemperatur des Verbrennungsfelds die Verbrennungsfeldsolltemperatur ($T_N$) wird.

5. Steuerungsgerät einer Brennkraftmaschine (1) nach Anspruch 1, die Folgendes aufweist:

eine Einspritzdruckeinstelleinheit, die einen Einspritzdruck des Kraftstoffs, der von dem Kraftstoffeinspritzventil (23) eingespritzt wird, einstellt,
wobei die Eingangswärmemengeneinstelleinheit gestaltet ist, um durch die Verwendung der Einspritzdruckeinstelleinheit den Einspritzdruck derart festzulegen, dass die Flammentemperatur des Verbrennungsfelds die Verbrennungsfeldsolltemperatur ($T_N$) wird.

6. Steuerungsgerät einer Brennkraftmaschine (1) nach Anspruch 1,
wobei die Eingangswärmemengenspezifikationseinheit gestaltet ist, um unter Berücksichtigung eines Einflussgrads, den die Wärmemenge, die in dem Verbrennungsfeld in einem vorangegangenen Mikrozeitraum erzeugt wird, auf die Temperatur ($Th_\alpha$) vor dem Start der Verbrennung in dem Verbrennungsfeld in dem derzeitigen Mikrozeitraum ausübt, die Wärmemenge, die in die Brennkammer (3) eingeht, gemäß der die Flammentemperatur während der Verbrennung in dem Verbrennungsfeld in dem derzeitigen Mikrozeitraum die Verbrennungsfeldsolltemperatur ($T_N$) wird, durch Korrigieren der Temperatur ($Th_\alpha$) vor dem Start der Verbrennung in dem derzeitigen Mikrozeitraum zu spezifizieren.

7. Steuerungsgerät einer Brennkraftmaschine (1) nach Anspruch 1,
wobei die Eingangswärmemengenspezifikationseinheit gestaltet ist, um unter Berücksichtigung eines Verringerungsausmaßes der Flammentemperatur des Verbrennungsfelds aufgrund des Kraftstoffs, der in die Brennkammer (3) eingespritzt wird, die Temperatur ($Th_\alpha$) vor dem Start der Verbrennung in dem derzeitigen Mikrozeitraum durch Korrigieren der Temperatur vor dem Start der Verbrennung in einem vorangegangenen Mikrozeitraum zu erhalten, und um die Wärmemenge, die in die Brennkammer (3) eingeht, gemäß der die Flammentemperatur während der Verbrennung in dem Verbrennungsfeld in dem derzeitigen Mikrozeitraum die Verbrennungsfeldsolltemperatur ($T_N$) wird, zu spezifizieren.

8. Steuerungsgerät einer Brennkraftmaschine (1) nach Anspruch 1, die Folgendes aufweist:

eine Sprühnebelbewegungseinheit, die in einem Fall, in dem die Temperatur ($Th_\alpha$) vor dem Start der Verbrennung in dem Verbrennungsfeld größer ist als oder gleich ist wie die Verbrennungsfeldsolltemperatur ($T_N$), einen Kraftstoffsprühnebel derart bewegt, dass ein neues Verbrennungsfeld in einem Bereich ausgebildet wird, der von dem des Verbrennungsfelds verschieden ist, in das die Wärmemenge, die durch die Eingangswärmemengenspezifikationseinheit spezifiziert ist, einzubringen ist.

9. Steuerungsgerät einer Brennkraftmaschine (1) nach Anspruch 8,
wobei die Sprühnebelbewegungseinheit gestaltet ist, um zumindest eine einer Änderung des Einspritzdrucks des Kraftstoffs, der von dem Kraftstoffeinspritzventil (23) eingespritzt wird, einer Änderung eines Wirbels in der Brennkammer (3), einer Änderung eines Kraftstoffeinspritzintervalls und einer Änderung eines Kraftstoffeinspritzzeitraums auszuführen.

10. Steuerungsgerät einer Brennkraftmaschine (1) nach Anspruch 1,
wobei die Eingangswärmemengenspezifikationseinheit gestaltet ist, um die spezifische Wärme des Gases, das in dem Verbrennungsfeld in dem derzeitigen Mikrozeitraum vorliegt, durch Korrigieren der spezifischen Wärme des Gases, das in dem Verbrennungsfeld in einem vorangegangenen Mikrozeitraum vorliegt, zu erhalten, und um die Wärmemenge, die in die Brennkammer (3) eingeht, gemäß der die Flammentemperatur während der Verbrennung in dem Verbrennungsfeld in dem derzeitigen Mikrozeitraum die Verbrennungsfeldsolltemperatur ($T_N$) wird, zu spezifizieren.

11. Steuerungsgerät einer Brennkraftmaschine (1) nach Anspruch 1,
wobei die Eingangswärmemengenspezifikationseinheit gestaltet ist, um eine Eingangswärmemenge aus einem Eingangswärmemengenspezifikationskennfeld auszulesen, das eine Spezifikation einer Wärmemenge, die in die Brennkammer (3) eingeht, in Übereinstimmung mit der Verbrennungsfeldsolltemperatur ($T_N$) ermöglicht.

**Revendications**

1. Appareil de commande d'un moteur à combustion interne à allumage spontané par compression (1) dans lequel le carburant injecté par une soupape d'injection de carburant (23) brûle par allumage spontané dans une chambre de combustion (3), l'appareil de commande comprenant :

une unité de spécification de quantité de chaleur d'entrée qui, en utilisant le volume ($V_c(\alpha)$) d'un champ de combustion qui est un espace à l'intérieur de la chambre de combustion (3) dans lequel un mélange air/carburant existe et est brûlé, la température ($Th_\alpha$) avant le début de la combustion dans le champ de combustion, une température cible de champ de combustion ($T_N$) destinée à limiter la quantité de NOx produite pendant la combustion dans le champ de combustion à une quantité de production de NOx cible prédéterminée, la densité du gaz (p) qui existe dans le champ de combustion, et la chaleur spécifique ($\sigma$) du gaz qui existe dans le champ de combustion comme paramètres, spécifie une quantité de chaleur transmise à la chambre de combustion (3) et selon laquelle la température de flamme pendant la combustion dans le champ de combustion devient la température cible du champ de combustion ($T_N$) ; et
une unité de réglage de quantité de chaleur d'entrée qui ajuste une quantité de chaleur ($Q(\alpha)$) transmise à la chambre de combustion (3) en utilisant la quantité de chaleur d'entrée spécifiée par l'unité de spécification de quantité de chaleur d'entrée comme une valeur maximale de quantité de chaleur d'entrée,
dans lequel l'unité de spécification de quantité de chaleur d'entrée est configurée de façon à séparer une période de combustion dans la chambre de combustion (3) en une pluralité de micro-périodes, et à spécifier la quantité de chaleur transmise à la chambre de combustion (3) et selon laquelle la température de flamme du champ de combustion devient la température cible du champ de combustion ($T_N$) pendant chacune des micro-périodes,
dans lequel la quantité de chaleur $Q(\alpha)$ transmise à la chambre de combustion (3) est définie de façon à être inférieure ou égale à la valeur maximale de la quantité de chaleur d'entrée selon l'inégalité suivante :

$$Q(\alpha) \leq \rho(\alpha)\sigma(\alpha)V_C(\alpha)(T_N - Th_\alpha)$$

dans laquelle $\alpha$ correspond à une valeur représentative d'un angle de vilebrequin pendant une micro-période, $V_c(\alpha)$ correspond au volume du champ de combustion qui est un espace occupé par un jet de carburant injecté pendant la micro-période, $Th_\alpha$ correspond à la température du mélange air/carburant qui existe dans le champ de combustion au moment où l'injection de carburant est effectuée pendant la micro-période, p (a) correspond à la densité du gaz dans le champ de combustion pendant la micro-période, $\sigma(\alpha)$ correspond à la chaleur spécifique du gaz dans le champ de combustion pendant la micro-période, $T_N$ correspond à une température de combustion cible dans le champ de combustion pendant la micro-période, et $Q(\alpha)$ correspond à la quantité de chaleur d'entrée de la chambre de combustion (3) pendant la micro-période.

2. Appareil de commande d'un moteur à combustion interne (1) selon la revendication 1, dans lequel l'unité de spécification de quantité de chaleur d'entrée est configurée de façon à spécifier la quantité de chaleur transmise à la chambre de combustion (3) et selon laquelle la température de flamme pendant la combustion dans le champ de combustion devient la température cible de champ de combustion ($T_N$) uniquement, pendant la période de combustion dans la chambre de combustion (3), pendant une période (S) qui va jusqu'au moment où un taux de génération de chaleur atteint sensiblement une valeur maximale.

3. Appareil de commande d'un moteur à combustion interne (1) selon la revendication 1, dans lequel l'unité de réglage de quantité de chaleur d'entrée est configurée de façon à connaître, avant une quantité qui est convertie en une quantité de chaleur dans la chambre de combustion (3), une quantité d'injection de carburant injectée par la soupape d'injection de carburant (23) dans la chambre de combustion (3), et à définir une quantité de carburant injectée par la soupape d'injection de carburant (23) de sorte qu'une quantité de chaleur transmise à la chambre de combustion (3) qui correspond à la quantité de chaleur convertie soit inférieure ou égale à la valeur maximale de la quantité de chaleur d'entrée.

4. Appareil de commande d'un moteur à combustion interne (1) selon la revendication 1, qui comprend :

   un appareil de recirculation de gaz d'échappement (8, 81, 82) qui remet en circulation une partie des gaz d'échappement évacués par un système d'échappement (7) vers un système d'admission (6), dans lequel l'unité de réglage de quantité de chaleur d'entrée est configurée de façon à régler la quantité de chaleur transmise à la chambre de combustion (3) en définissant une quantité de gaz d'échappement remise en circulation par l'appareil de recirculation de gaz d'échappement (8, 81, 82) de sorte que la température de flamme du champ de combustion devienne la température cible du champ de combustion ($T_N$).

5. Appareil de commande d'un moteur à combustion interne (1) selon la revendication 1, qui comprend :

   une unité de réglage de pression d'injection qui règle une pression d'injection du carburant injecté par la soupape d'injection de carburant (23), dans lequel l'unité de réglage de quantité de chaleur d'entrée est configurée de façon, à l'aide de l'unité de réglage de pression d'injection, à définir la pression d'injection de sorte que la température de flamme du champ de combustion devienne la température cible du champ de combustion ($T_N$).

6. Appareil de commande d'un moteur à combustion interne (1) selon la revendication 1, dans lequel l'unité de spécification de quantité de chaleur d'entrée est configurée de façon, en tenant compte d'un degré d'influence de la quantité de chaleur générée dans le champ de combustion pendant une micro-période précédente sur la température ($Th_\alpha$) avant le début de la combustion dans le champ de combustion pendant la micro-période actuelle, à spécifier la quantité de chaleur transmise à la chambre de combustion (3) et selon laquelle la température de flamme pendant la combustion dans le champ de combustion pendant la micro-période actuelle devient la température cible du champ de combustion ($T_N$), en corrigeant la température ($Th_\alpha$) avant le début de la combustion pendant la micro-période actuelle.

7. Appareil de commande d'un moteur à combustion interne (1) selon la revendication 1, dans lequel l'unité de spécification de quantité de chaleur d'entrée est configurée de façon, en tenant compte d'une quantité de diminution de la température de flamme du champ de combustion due au carburant injecté dans la chambre de combustion (3), à obtenir la température ($Th_\alpha$) avant le début de la combustion pendant la micro-période actuelle en corrigeant la température avant le début de la combustion pendant une micro-période précédente, et à spécifier la quantité de chaleur transmise à la chambre de combustion (3) et selon laquelle la température de flamme pendant la combustion dans le champ de combustion pendant la micro-période actuelle devient la température cible du champ de combustion ($T_N$).

8. Appareil de commande d'un moteur à combustion interne (1) selon la revendication 1, qui comprend :

une unité de déplacement de jet qui, lorsque la température ($Th_\alpha$) avant le début de la combustion dans le champ de combustion est supérieure ou égale à la température cible du champ de combustion ($T_N$), déplace un jet de carburant de sorte qu'un nouveau champ de combustion soit formé dans une zone différente de celle du champ de combustion à laquelle la quantité de chaleur spécifiée par l'unité de spécification de quantité de chaleur doit être transmise.

9. Appareil de commande d'un moteur à combustion interne (1) selon la revendication 8, dans lequel l'unité de déplacement de jet est configurée de façon à exécuter au moins l'un d'un changement de la pression d'injection du carburant injecté par la soupape d'injection de carburant (23), d'un changement de tourbillon dans la chambre de combustion (3), d'un changement d'intervalle d'injection de carburant, et d'un changement de période d'injection de carburant.

10. Appareil de commande d'un moteur à combustion interne (1) selon la revendication 1, dans lequel l'unité de spécification de quantité de chaleur d'entrée est configurée de façon à obtenir la chaleur spécifique du gaz qui existe dans le champ de combustion pendant la micro-période actuelle en corrigeant la chaleur spécifique du gaz qui existe dans le champ de combustion pendant une micro-période précédente, et à spécifier la quantité de chaleur transmise à la chambre de combustion (3) et selon laquelle la température de flamme pendant la combustion dans le champ de combustion pendant la micro-période actuelle devient la température cible du champ de combustion ($T_N$).

11. Appareil de commande d'un moteur à combustion interne (1) selon la revendication 1, dans lequel l'unité de spécification de quantité de chaleur d'entrée est configurée de façon à extraire une quantité de chaleur d'entrée d'un graphique de spécification de quantité de chaleur d'entrée qui permet de spécifier une quantité de chaleur transmise à la chambre de combustion (3) en fonction de la température cible du champ de combustion ($T_N$).

FIG.1

FIG.2

FIG.3

100: ECU

| | |
|---|---|
| 40 — Crank position sensor | |
| 41 — Rail pressure sensor | |
| 42 — Throttle opening degree sensor | |
| 43 — Air flow meter | |
| 44 — A/F sensor | |
| 45 — Exhaust temperature sensor | Input interface |
| 46 — Water temperature sensor | |
| 47 — Accelerator opening degree sensor | |
| 48 — Intake pressure sensor | |
| 49 — Intake temperature sensor | |
| 21 — Supply pump | |
| 23 — Injector | |
| 26 — Fuel addition valve | Output interface |
| 62 — Throttle valve | |
| 66 — Swirl control valve | |
| 81 — EGR valve | |

105

Backup RAM — 104

RAM — 103

ROM — 102

CPU — 101

107

106

FIG.4

FIG.5

FIG.6

FIG.7

FIG.8

FIG.9

(a)

(b)

FIG.10

EGR rate correction map

## FIG.11

Injection pressure correction map

X-axis: Gm−Gt, Y-axis: Injection pressure

## FIG.12

Injection pressure correction map

X-axis: Gm−Gt, Y-axis: Injection pressure

**FIG.13**

Temperature before start of combustion
correction coefficient map

Correction coefficient $\beta$

1

0

Elapsed combustion time

**FIG.14**

Temperature before start of combustion
correction coefficient map

Correction coefficient $\gamma$

1

0

Elapsed combustion time

## FIG.15

Fuel injection pressure change map

Fuel injection pressure

$T_i - T_N$

## FIG.16

Swirl change map

Swirl control valve opening degree

$T_i - T_N$

FIG.17

Fuel injection period change map

FIG.18

Combustion gas specific heat correction coefficient map

# FIG.19

(a)

(b)

(c)

**EP 2 415 995 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005090368 A
- JP 2005180220 A
- US 6651432 B1

- US 2004261414 A1
- JP 2009007966 A
- WO 2008120664 A1